(19) Europäisches Patentamt / European Patent Office / Office européen des brevets

(11) **EP 3 004 010 B1**

(12) **EUROPEAN PATENT SPECIFICATION**

(45) Date of publication and mention
of the grant of the patent:
**29.03.2023   Bulletin 2023/13**

(21) Application number: **14726739.7**

(22) Date of filing: **22.05.2014**

(51) International Patent Classification (IPC):
**C03C 17/245** (2006.01)   **A01M 29/08** (2011.01)
**C03C 17/34** (2006.01)   **C03C 17/36** (2006.01)

(52) Cooperative Patent Classification (CPC):
**A01M 29/08; C03C 17/3417; G02B 1/115;**
C03C 2217/734

(86) International application number:
**PCT/GB2014/051569**

(87) International publication number:
**WO 2014/188196 (27.11.2014 Gazette 2014/48)**

(54) **A GLAZING**

VERGLASUNG

VITRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2013   GB 201309386**

(43) Date of publication of application:
**13.04.2016   Bulletin 2016/15**

(73) Proprietor: **Pilkington Group Limited**
**Nr. Ormskirk**
**Lancashire L40 5UF (GB)**

(72) Inventors:
• **RIDEALGH, John, Andrew**
  **Northwich**
  **Cheshire CW8 2TZ (GB)**
• **HURST, Simon, James**
  **Runcorn**
  **Cheshire WA7 1QW (GB)**
• **SLADE, Simon, John**
  **Ormskirk**
  **Lancashire L39 2AT (GB)**

(74) Representative: **Denno, Richard Christopher**
**Somer et al**
**Pilkington Group Limited**
**European Technical Centre**
**Hall Lane**
**Lathom**
**Ormskirk, Lancashire L40 5UF (GB)**

(56) References cited:
**EP-A2- 1 110 450**   **EP-A2- 1 479 294**
**US-A- 5 952 084**   **US-A- 6 165 598**
**US-A1- 2007 190 343**   **US-A1- 2009 130 349**
**US-A1- 2011 256 325**   **US-A1- 2013 003 208**
**US-A1- 2013 032 202**   **US-A1- 2013 087 720**

• **HEIKO HAUPT: "Auf dem Weg zu einem neuen
Mythos? Warum UV-Glas zur Vermeidung von
Vogelschlag noch nicht empfohlen werden
kann", BERICHTE ZUM VOGELSCHUTZ, vol.
47/48, 1 January 2011 (2011-01-01), pages
143-160, XP055065078,**

# EP 3 004 010 B1

**Description**

The present invention relates to a glazing for minimising or preventing bird collisions with windows or other glazings. The invention further relates to a method of manufacturing such a glazing.

Bird deaths due to window strikes represent one of the greatest threats to avian mortality next to habitat destruction. Due to the reflective and transparent characteristics of glass, the glass is not perceived as a barrier to the bird. The bird does not recognize that reflections of, for example, the sky, other buildings, vegetation and even open space, are false. As a result, the bird flies into the glass. Typically, the glass is a glazing in a building, for example, a window, but could equally be a glass balcony, a glazed door, etc.

Many millions of birds die each year from collisions with glass on buildings. While songbirds are most at risk from collisions with glass, nearly 300 species have been reported as collision victims, including hummingbirds, woodpeckers, kingfishers, waders and birds of prey. It is likely that these numbers will grow as advances in glass technology and production make it possible to construct buildings with all-glass curtain walls, in addition to the general increase in the amount of glass being used in architecture.

The reduction of bird strikes can be achieved in a number of ways. A common approach involves creating a visual signal that alerts the birds to the presence of the glass. Known techniques include the use of fritting, i.e. the placement of ceramic lines or dots on glass, the use of screens, latticework, or grilles. More recently however, it has been shown that the use of ultraviolet (UV) patterns on glass may help birds to detect the presence of the glass.

US2013003208A1 discloses a glass treatment for treating exterior glass to prevent bird collisions with the glass. The treatment consists of a plurality of visible markings applied to an exterior surface of the glass, the plurality of markings extending substantially across the entire exterior surface. The markings are separated from each other by a vertical distance not exceeding 2.5 inches and by a horizontal distance not exceeding 4.5 inches. The markings occupy no more than 15% of the exterior surface of the glass.

Many families of birds are tetrachromatic, possessing four types of cone cells each with a distinctive maximal absorption peak. In some bird families, the maximal absorption peak of the cone cell responsible for the shortest wavelength extends to the UV range, making them UV-sensitive. As such, many birds are able to see into the UV spectrum, in particular in the range 300 to 400nm, a range largely invisible to humans.

A UV reflective coated glass for preventing bird collisions is known under the registered trade mark Ornilux Mikado®. The glass has a UV patterned coating which is visible to birds but substantially invisible to the human eye. Disadvantageously, such glazing relies only on a UV-reflective coating and it is believed that in order to be effective, UV patterns need to have a strong contrast.

It is an object of the present invention to provide an improved glazing for minimising or preventing bird collisions with windows.

According to an aspect of the present invention there is provided a glazing for minimising or preventing bird collisions with windows or other glazings as set out in claim 1.

The elements are not linked or touching one another i.e. they are not interconnected. Advantageously, due to this arrangement, the manufacturing of the glazing is simplified as the glazing can be readily masked into separate areas when being coated.

Preferably, the antireflection coating is provided adjacent the UV reflectance coating. Preferably, the antireflection coating is provided adjacent the substrate.

Preferably the elements comprise a plurality of stripes. Preferably, the stripes are arranged parallel to a longitudinal axis of said substrate. The elements may comprise a plurality of dots. Preferably, the elements, preferably the stripes and/or dots are equidistantly spaced apart from one another. The stripes and/or dots may be randomly spaced.

Preferably, the patterned arrangement is a regular pattern. Preferably, the patterned arrangement has at least one line of symmetry. Preferably, the line of symmetry is perpendicular to the longitudinal axis of the glazing. Preferably, the patterned arrangement comprises a repeating pattern. The UV reflectance coating covers at least 20% of the subjacent surface. Most preferably, said coating covers at least 25% of the subjacent surface.

Preferably, a plurality of substantially 2.5cm wide UV-reflecting stripes of said reflectance coating are provided, preferably oriented parallel to a longitudinal axis of the at least one substrate. Preferably, said stripes are separated by substantially 5 cm, most preferably 7.5cm, antireflection coating stripes, said antireflection coating having a low UV reflectance. Preferably, the antireflection stripes are oriented parallel to a longitudinal axis of the at least one substrate.

In a most preferred arrangement, a plurality of substantially 2.5cm wide UV-reflecting stripes are deposited on top of an antireflection coating, preferably having a 10cm pitch. The antireflection coating thus forms 7.5cm antireflection stripes between each pair of 2.5cm wide UV-reflecting stripes. Advantageously, the arrangement provides an enhanced contrast over the whole visible range but with an optimised contrast in the UV range.

The UV reflectance coating may be provided as substantially 5cm wide UV-reflecting stripes oriented parallel to a longitudinal axis of the at least one substrate, and preferably separated by substantially 2.5cm antireflection coating stripes, said antireflection coating having a low UV reflectance. Preferably, the antireflection stripes are oriented parallel to a longitudinal axis of the at least one substrate.

The UV reflectance coating may be provided as a grid consisting of substantially 10cm wide UV-reflecting columns provided parallel to a longitudinal axis of the at least one substrate, separated by substantially 2.5 cm wide antireflection coating stripes, said antireflection coating having a low UV reflectance. Preferably, the antireflection stripes are oriented parallel to a longitudinal axis of the at least one substrate. Preferably, substantially 8cm wide UV-reflecting rows are provided perpendicular to a longitudinal axis of the at least one substrate separated by substantially 2.5 cm wide antireflection coating stripes, said antireflection coating having a low UV reflectance. Preferably, the antireflection stripes are provided perpendicular to a longitudinal axis of the at least one substrate.

Advantageously, the antireflection coating in combination with the patterned UV reflectance coating enhances bird visible UV reflected light in one area of the pattern while minimising broadband reflection (including bird-visible UV) in other areas to maximise the apparent contrast in bird vision. The effect of this is to produce a pattern that is highly visible to birds so allowing birds to avoid fatal collisions with buildings glazed with these coatings.

Preferably, the UV reflectance coating is deposited on an exterior facing surface of the substrate. This surface is often referred to as "surface #1" of the glazing.

The reflectance of glass can be reduced by the application of appropriate thin film interference coatings - "Anti-Reflection coatings". For a broad spectral response said coatings generally fall into 3 categories as follows:

1) Single layer coatings of porous low index materials such as porous silica - which give an intermediate effective refractive index between glass and air, so reducing the reflectance at the interfaces;

2) Three layer medium/high/low refractive index combinations. An example of such a combination is Glass/46nm $ZnSnO_x$/93nm $TiO_2$/75nm $SiO_2$;

3) Four layer high/low/high/low refractive index combinations such as the "Optiview" coating (nominally Glass/12nm $SnO_x$/25nm $SiO_2$/110nm $SnO_x$/90nm $SiO_2$).

All of said categories are considered to be equally valid for the purposes of the present invention, as are other variations based on the same principles.

Preferably, the antireflection coating comprises a plurality of layers. Preferably, said layers comprise a first layer comprising tin oxide ($SnO_2$). Preferably, the first layer, most preferably $SnO_2$, has a geometric thickness of between substantially 5nm and 100nm, preferably between 10nm and 50nm, preferably between 10nm and 20nm, most preferably substantially 12nm.

Preferably, a second layer is provided preferably comprising silicon dioxide ($SiO_2$), preferably the $SiO_2$ has a geometric thickness of between substantially 5nm and 100nm, preferably between 10nm and 50nm, preferably between 15nm and 30nm, most preferably substantially 25nm. Most preferably, the second layer is deposited over the first layer.

Preferably, a third layer is provided preferably comprising fluorine doped tin oxide ($F:SnO_2$) preferably the $F:SnO_2$ had a geometric thickness of between substantially 5nm and 200nm, preferably between 50nm and 150nm, preferably between 100nm and 120nm, most preferably substantially 110nm. Most preferably, the third layer is deposited over the second layer.

Preferably, a fourth layer is provided preferably comprising $SiO_2$. Preferably, the $SiO_2$ has a geometric thickness of between substantially 5nm and 200nm, preferably between 50nm and 150nm, preferably between 80nm and 100nm, most preferably substantially 90nm. Most preferably, the fourth layer is deposited over the third layer. Such antireflection coating comprising said layers first to fourth respectively, is referred to as an Optiview coating.

The UV reflectance coating comprises titanium dioxide ($TiO_2$). Said coating has a geometric thickness of between substantially 10-50nm thick, and most preferably substantially 35nm thick. Preferably, the UV reflectance coating may be a single layer of titanium oxide ($TiO_2$). Said coating may be deposited by magnetron sputtering, CVD, PCVD, sol-gel, or other thin film deposition techniques. Most preferably, said coating is deposited by CVD.

In a most preferred arrangement, the glazing comprises a plurality of coating layers having the sequential arrangement: substrate, preferably glass; $SnO_2$ having a geometric thickness of 12nm; $SiO_2$ having a geometric thickness of 25nm deposited over the $SnO_2$; $F:SnO_2$ having a geometric thickness of 110nm deposited over the $SiO_2$; $SiO_2$ having a geometric thickness of 90nm deposited over the $F:SnO_2$; UV reflectance coating comprising $TiO_2$ having a geometric thickness of 35nm.

Preferably, the at least one substrate is a ply of glass, preferably a float or rolled glass. Preferably, the or each substrate of glass is a pane of extra clear glass (glass having greater than 85 % visible light transmission (measured with Illuminant A) at thicknesses preferably from 2 to 20 mm, most preferably substantially 4mm geometric thickness. The substrate may be a low-iron float glass, for example, having an iron content of 0.015% w/w or lower. The or each substrate may be a ply of tinted glass having a visible light transmission of less than 85%.

The invention is not limited to the substrate being a glazing in a building. For example, the substrate may be a door, a balcony, a spandrel. The substrate may be manufactured from polymeric material.

Preferably, the substrate comprises a surface #1 and a surface #2. Surface #1 is that surface of the substrate which faces the exterior of a building when mounted in use.

Preferably, an antireflection coating is provided on surface #1 and/or surface #2 of the substrate. The UV reflectance coating is provided on top of at least a part of the antireflection coating preferably when the antireflection coating is provided on surface #1. The antireflection coating may be on surface #2 with the UV reflectance coating deposited directly on top of said antireflection coating. Most preferably, the antireflection coating is provided on surface #1, and the patterned elements of the UV reflectance coating are provided directly on top of said antireflection coating. Preferably the UV reflectance coating is provided on an exterior facing surface of the glazing. Advantageously, the present arrangement provides an enhanced contrast in the glazing by combining a UV reflectance coating with an antireflection coating in the contrasting areas.

Preferably, the glazing comprises a further coating, preferably a solar control coating, preferably a low-E coating.

In a further aspect the invention provides an insulated glazing unit for minimising or preventing bird collisions with windows or other glazings as set out in claim 8.

Preferably, a space is provided between the first sheet of glazing material and the second sheet of glazing material, wherein the first sheet of glazing material has a first surface (surface #1) and an opposing second surface (surface #2), the second surface of the first sheet of glazing material facing the space. The second sheet of glazing material has a third surface (surface #3) and an opposing fourth surface (surface #4), the third surface of the second sheet of glazing material facing the space. In use, surface #1 faces the exterior of a building.

Preferably, the antireflection coating is provided on the first surface of the unit. Preferably, a second antireflection coating is provided on the unit, preferably on the second surface. The UV reflectance coating is provided on top of the antireflection coating on the first surface and/or the second surface. The second antireflection coating may be provided on a fourth surface of the unit.

Preferably, a further antireflection coating is provided on surface #1 and/or surface #2 and/or surface #3 and/or surface #4. Preferably, a further UV reflectance coating is provided on surface #1 and/or surface #2 and/or surface #3 and/or surface #4.

In a further aspect the invention provides an insulated glazing unit for minimising or preventing bird collisions with windows or other glazings as set out in claim 10.

Preferably, the first sheet of glazing material has a first surface (surface #1) and an opposing second surface (surface #2), the second sheet of glazing material has a third surface (surface #3) and an opposing fourth surface (surface #4), and the third sheet of glazing material has a fifth surface (surface #5) and an opposing sixth surface (surface #6). In use in a building glazing, surface #1 faces the exterior of a building and surface #6 faces the interior of a building.

Preferably, an antireflection coating is provided on surface #1. The or a further antireflection coating may be provided on surface #2 and/or surface #3 and/or surface #4 and/or surface #5 and/or surface #6. Most preferably, a UV reflectance coating is provided on surface #1, preferably being deposited directly over the antireflection coating. The or a further UV reflectance coating may be provided on surface #2 and/or surface #3 and/or surface #4 and/or surface #5 and/or surface #6.

Preferably, at least one solar control coating or low E coating is provided on surface #2 and/or surface #3 and/or surface #4 and/or surface #5 and/or surface #6.

The or each said UV reflectance coating comprises titanium dioxide ($TiO_2$). Said coating has a geometric thickness of between substantially 10-50nm thick, and most preferably 35nm thick. Preferably, the UV reflectance coating may be a single layer of titanium oxide ($TiO_2$). Said coating may be deposited by magnetron sputtering, CVD, PCVD, sol-gel, or other thin film deposition techniques. Most preferably, said coating is deposited by CVD. Preferably, the or each antireflection coating comprises a plurality of layers comprising: $SnO_2$ having a geometric thickness of 12nm; $SiO_2$ having a geometric thickness of 25nm deposited over the $SnO_2$; $F:SnO_2$ having a geometric thickness of 110nm deposited over the $SiO_2$; $SiO_2$ having a geometric thickness of 90nm deposited over the $F:SnO_2$. Most preferably, the or each UV reflectance coating comprising $TiO_2$ having a geometric thickness of 35nm is deposited over the $SiO_2$.

In a further aspect, the invention provides a method of manufacturing a glazing for minimising or preventing bird collisions with windows or other glazings as set out in claim 14.

The UV reflectance coating comprises a plurality of separate elements, preferably each element being separate from a neighbouring element.

The UV reflectance coating comprises $TiO_2$. Preferably, the antireflection coating comprises $SiO_2$.

Preferably, step (b) is carried out using a chemical vapour deposition process. Preferably, step (c) is carried out using a sputtering process, preferably by shadow masking sputtered titania. The or each process may be carried out by magnetron sputtering, PCVD, sol-gel, localised deposition, or other thin film deposition techniques. The UV reflectance coating may be deposited by a sol gel process.

In a further aspect, the invention provides a use of a glazing or glazing unit as hereinbefore described, as an anti-collision bird safe glazing.

All of the features described herein may be combined with any one of the above aspects, in any combination.

An embodiment of the invention will now be described, by way of example only, with reference to the accompanying drawings, wherein:

Figure 1 shows a schematic sectional view of a glazing according to the present invention;

Figure 2 shows a schematic sectional view of a part of a glazing according to the present invention;

Figure 3 shows a plan view of a glazing according to the present invention;

Figure 4 shows a transmittance and reflectance graphs of an optical model fit for a 4mm clear float substrate having an Optiview coating on a first surface;

Figure 5 shows a derivation of BUVAMI curve for different glazing;

Figure 6 shows a graph of variation in BUVAM1 with TiO2 thickness in relation to the glazing of Figure 1;

Figure 7 shows visible colour attribute curves of the glazing of Figure 1;

Figure 8 shows a schematic sectional view of an embodiment of a glazing outside the scope of the present invention;

Figure 9 shows a graph of variation in BUVAM1 with TiO2 thickness in relation to the glazing of Figure 8;

Figure 10 shows visible colour attribute curves of the glazing of Figure 8;

Figure 11 shows a schematic sectional view of an embodiment of a glazing outside the scope of the present invention;

Figure 12 shows a graph of variation in BUVAM1 with TiO2 thickness in relation to the glazing of Figure 11;

Figure 13 shows visible colour attribute curves of the glazing of Figure 11;

Figure 14 shows a schematic sectional view of an embodiment of a glazing outside the scope of the present invention;

Figure 15 shows a graph of variation in BUVAM1 with TiO2 thickness in relation to the glazing of Figure 14;

Figure 16 shows visible colour attribute curves of the glazing of Figure 14;

Figure 17 shows a schematic sectional view of an embodiment of a glazing according to the present invention;

Figure 18 shows a graph of variation in BUVAM1 with TiO2 thickness in relation to the glazing of Figure 17;

Figure 19 shows visible colour attribute curves of the glazing of Figure 17;

Figure 20 shows a schematic sectional view of an embodiment of a glazing according to the present invention;

Figure 21 shows a graph of variation in BUVAM1 with TiO2 thickness in relation to the glazing of Figure 20;

Figure 22 shows visible colour attribute curves of the glazing of Figure 20;

Figure 23 shows a schematic sectional view of an embodiment of a glazing according to the present invention;

Figure 24 shows a graph of variation in BUVAM1 with TiO2 thickness in relation to the glazing of Figure 23;

Figure 25 shows visible colour attribute curves of the glazing of Figure 23;

Figure 26 shows a schematic sectional view of an embodiment of a glazing outside the scope of the present invention;

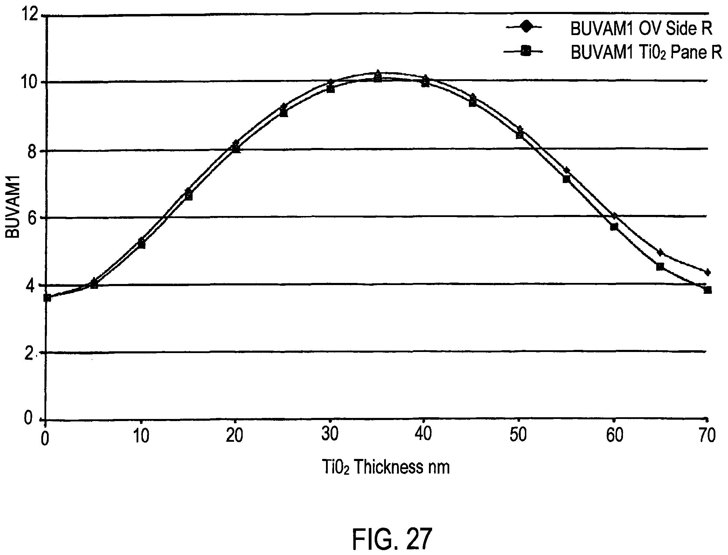

Figure 27 shows a graph of variation in BUVAM1 with TiO2 thickness in relation to the glazing of Figure 26;

Figure 28 shows visible colour attribute curves of the glazing of Figure 26; and

Figure 29 shows a schematic sectional view of a triple glazed unit of the present invention.

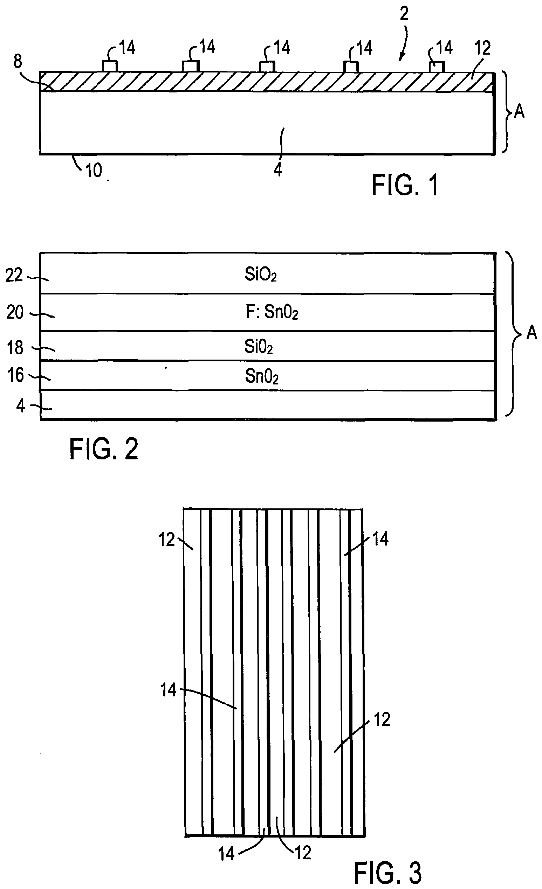

Figure 1 shows a glazing 2 according to the present invention. The glazing comprises a 4mm glass substrate 4 of float glass having a first surface 8 and a second surface 10. The first surface 8 is that surface of the glazing which faces the exterior of a building when mounted in use, often referred to as "surface #1" of the glazing. An antireflection coating 12 (shown by hatched lines) is provided directly on to the first surface 8, and a UV reflectance coating 14 is provided on top of the antireflection coating 12 in a patterned arrangement comprising a number of separate elements 14.

The antireflection coating 12 was deposited on to the substrate 4 using chemical vapour deposition in the float bath region of a float furnace, a process as described in WO97/42357A1 and hereby incorporated. Said coating 12 consists of a plurality of layers as shown in Figure 2, comprising: a first layer 16 of $SnO_2$ having a geometric thickness of approximately 12nm; a second layer 18 of $SiO_2$ having a geometric thickness of approximately 25nm deposited over the first layer 16; a third layer 20 of $F:SnO_2$ having a geometric thickness of approximately 110nm deposited over the second layer 18; and a fourth layer 22 of $SiO_2$ having a geometric thickness of approximately 90nm deposited over the third layer 20. Such a coating is hereinafter also referred to as an Optiview coating.

The UV reflectance coating 14 comprises titanium oxide having a geometric thickness of approximately 31nm. As shown in Figure 3, the coating 14 was deposited in a striped pattern directly on top of the antireflection coating 12. Deposition was by sputter coating as will be described in further detail below.

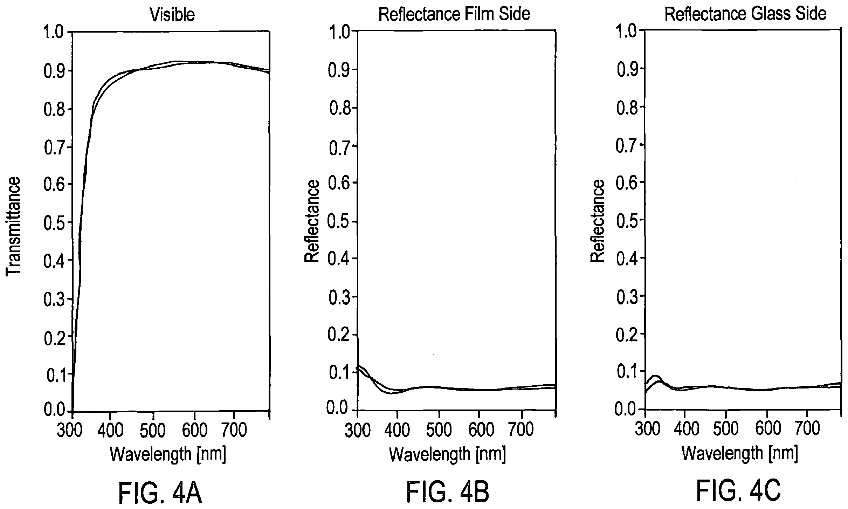

In order to deposit the optimum coating for avian vision, optical modelling simulation was carried out. A basic model of the antireflection coating 12 was made to allow the simulation of different sputtered $TiO_2$ thicknesses in different constructions. A number of glazing configurations were modelled as shown in the figures. CODE™ optical modelling software was used to produce an effective approximation of the optical response of the antireflection coating 12 as shown in Figures 4.

$TiO_2$ Coating Optimisation

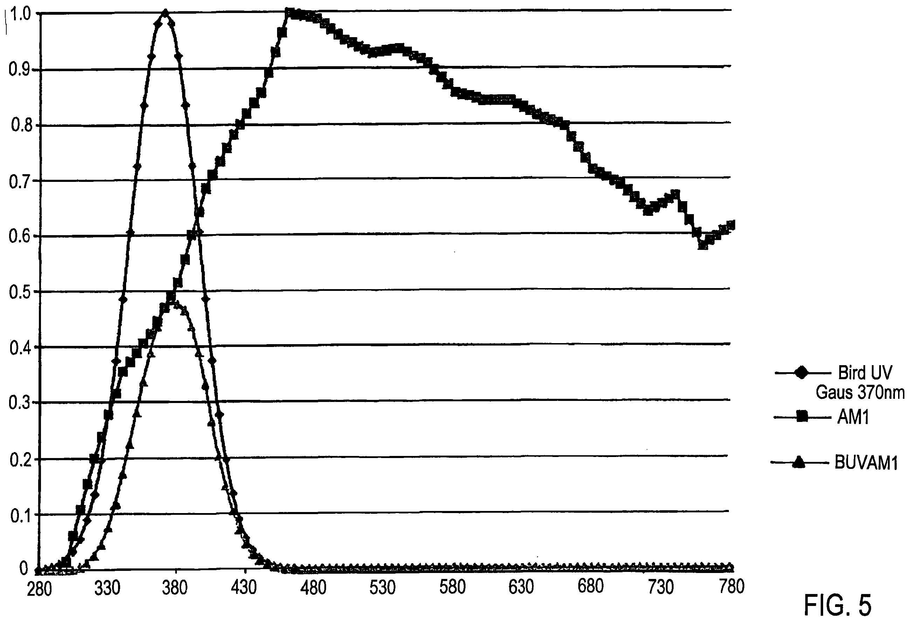

As bird vision is not covered by the usual standard integrated optical values a new integrated value needed to be constructed. This was based on our understanding that bird short-wave UV eye sensitivity peaked at 370nm with approx $\pm$25nm width at FWHM. The situation is complicated by the fact that the solar curve is decreasing rapidly in intensity in this region. An appropriate combined curve for an integrated value is obtained by multiplying normalised versions of the two together. This curve has been called BUVAM1 and is shown with its parent curves in Figure 5.

BUVAM1 is a measure of Bird-visible UV energy calculated by convoluting a Gaussian curve, representing Bird UV-cone vision, with the air-mass 1 (AM1) solar energy curve. The Gaussian curve is centred on 370 nm with approx $\pm$25nm width at FWHM. The BUVAM1 curve is integrated against the measured/predicted spectrum for the coating to give an integrated BUVAM1 curve.

The BUVAM1 curve can be used as the data source for integration against the model spectral curves within the CODE optical modelling software. It can be used to generate integrated Bird UV figures for different construction embodiments, and to optimise those constructions for performance and colour.

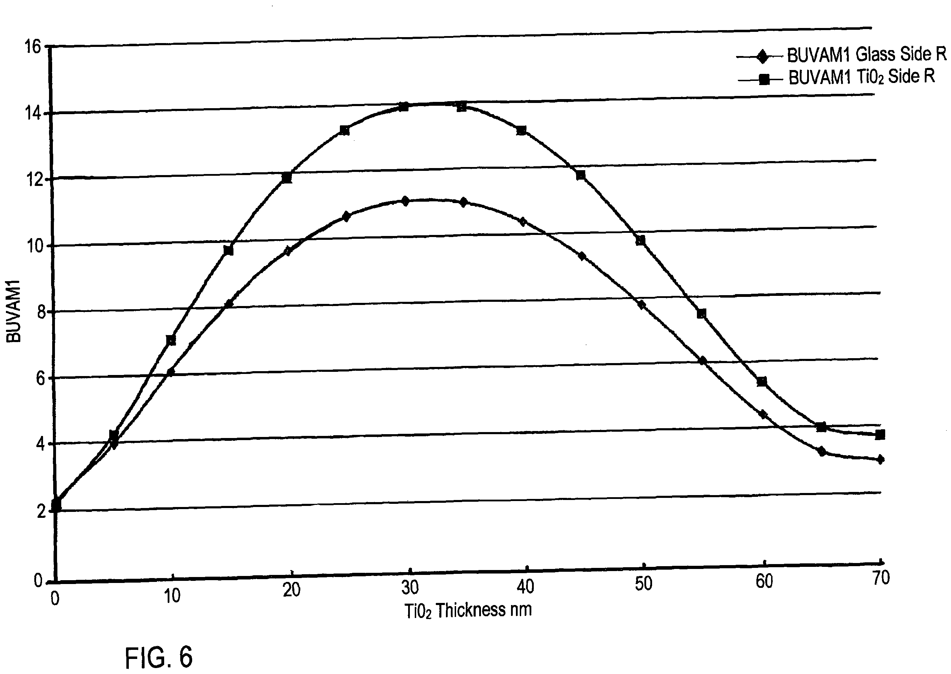

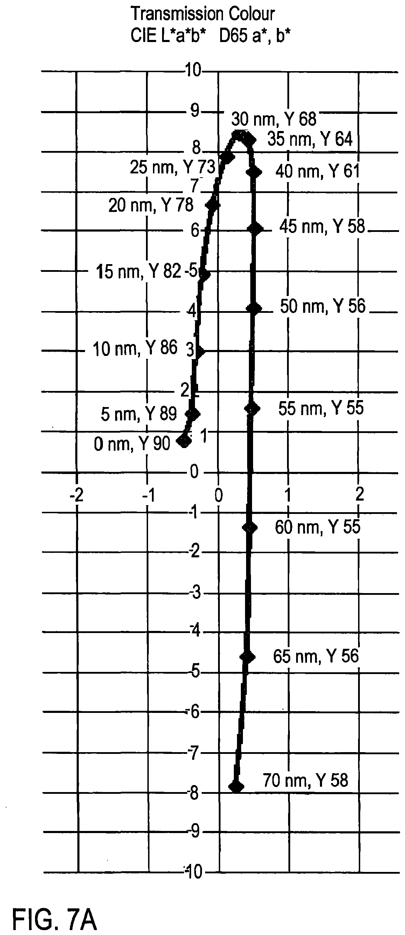

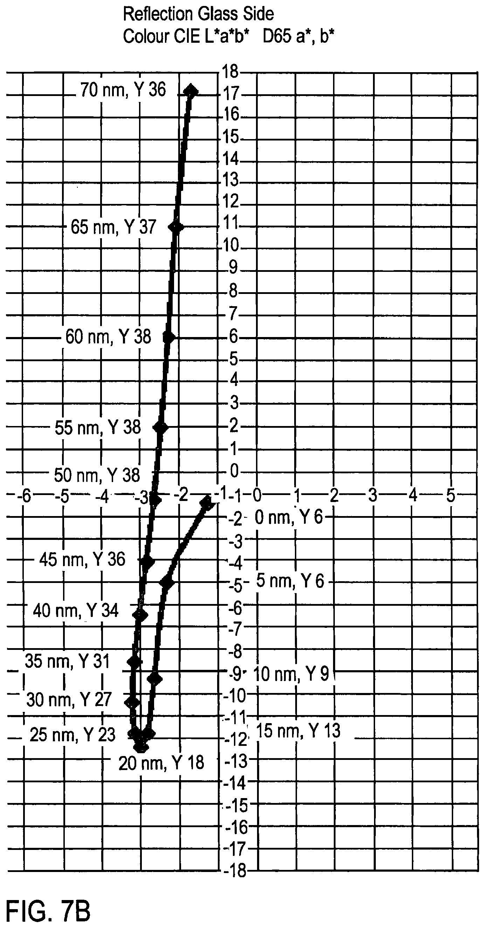

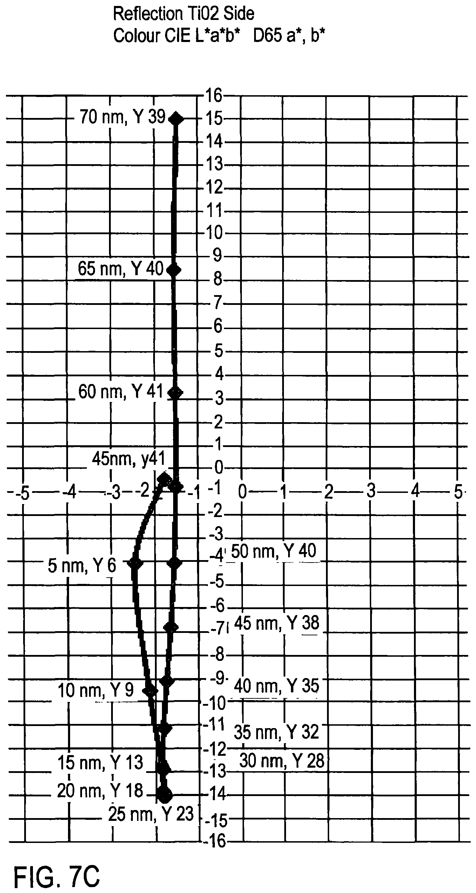

The BUVAM1 reflectance of a single glazed construction as shown in Figure 1 was calculated from either side of the construction for varying $TiO_2$ thickness. The data shown in Figure 6 allows optimisation for BUVAM1 reflectance. It is clear that having the $TiO_2$ coating on the external surface (surface #1) as represented by the "blocks" line referenced in Figure 6 as "BUVAMI TiO2 Side R" gives the best UV reflectance for a given $TiO_2$ thickness. The maximum reflectance is achieved at around 35nm with the $TiO_2$ side reflectance being about six times that of the non UV coated glass. Figures 7 shows the visible colour attributes of single glazed TiO2 pattern coated directly on to an antireflective coating (Optiview coating) on a glass substrate.

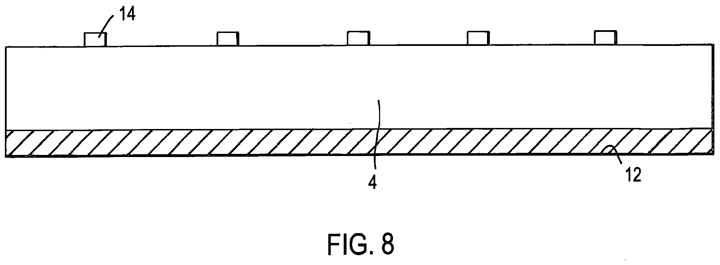

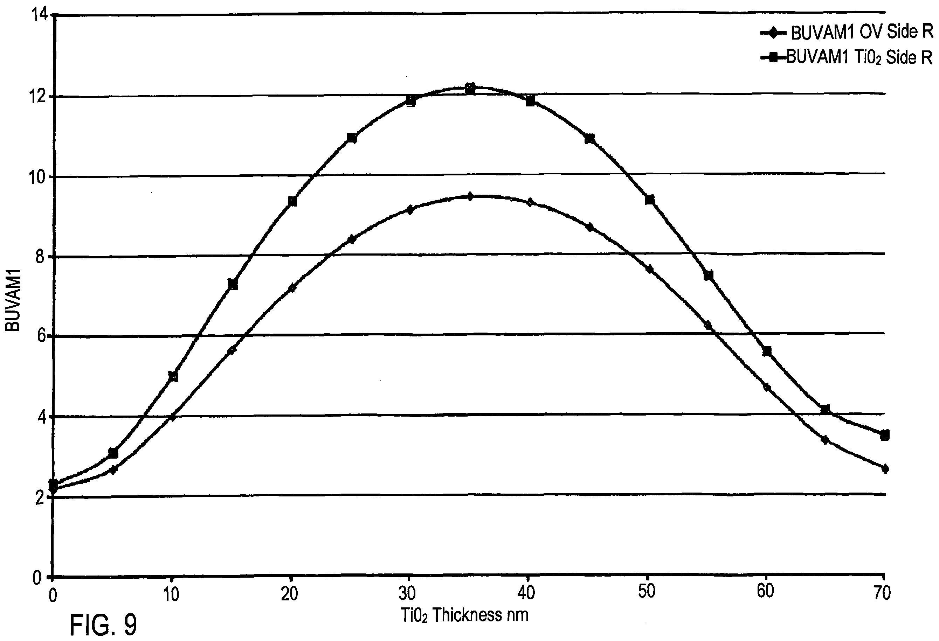

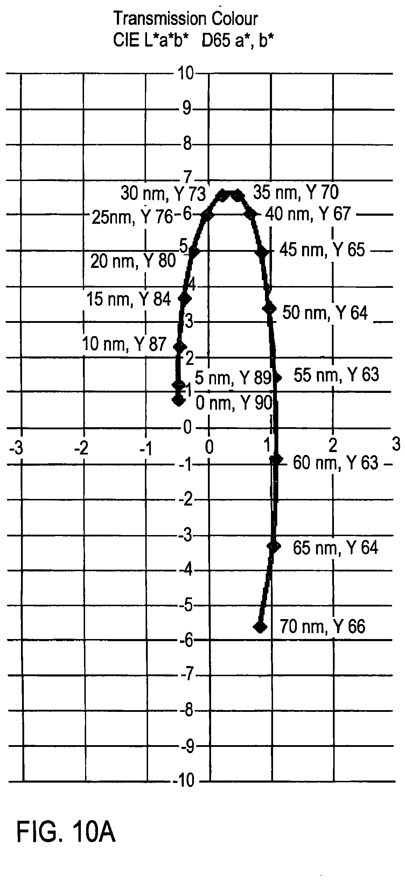

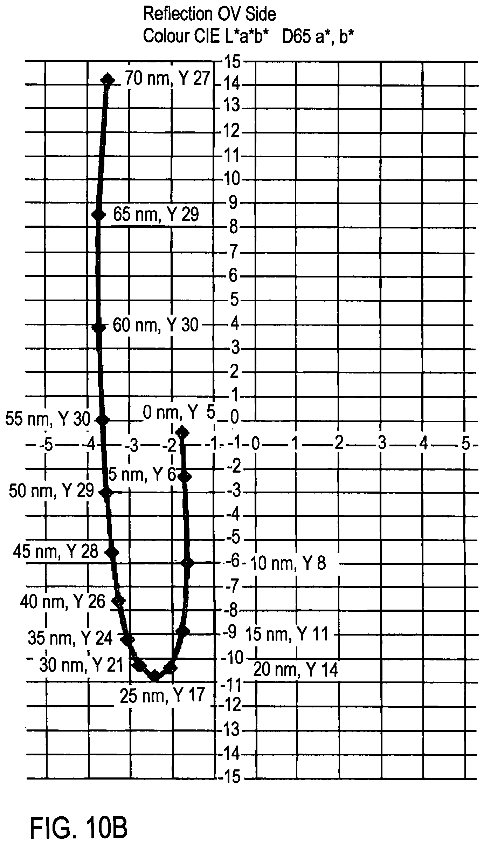

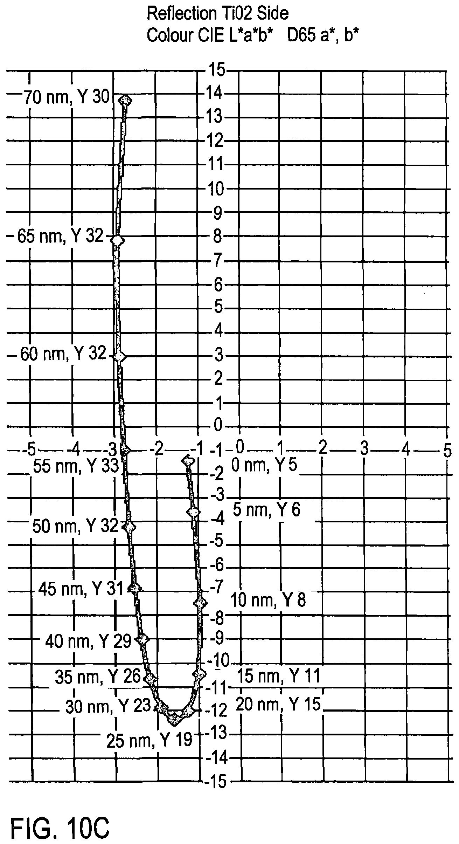

Figure 8 shows an embodiment outside the scope of the present invention of a single glazed construction in which the UV reflectance coating 14 is deposited directly on to surface #1 of the glass substrate 4 and the antireflection coating 12 is deposited on to surface #2 of the substrate. Figures 9 and 10 again show the advantages of having the TiO2 on the external surface.

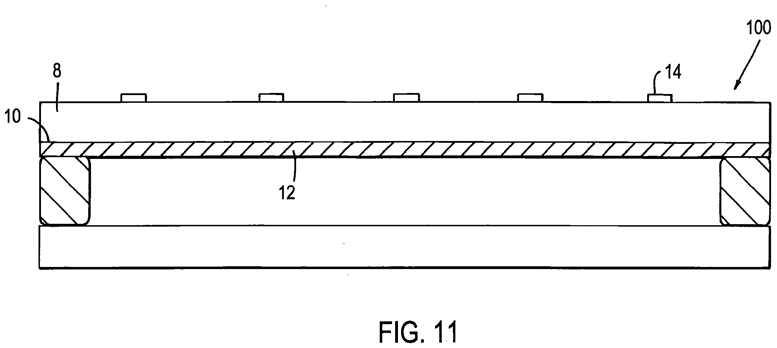

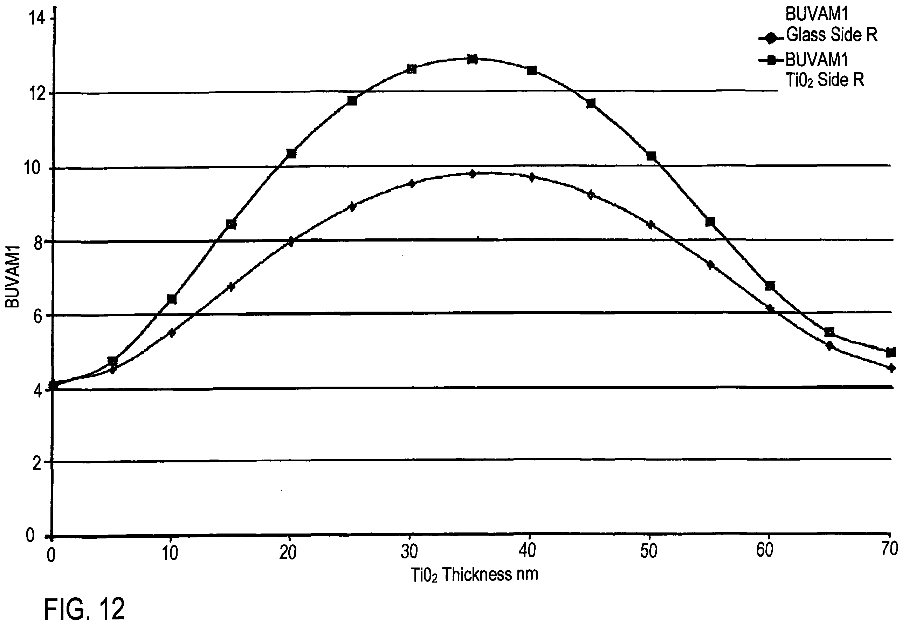

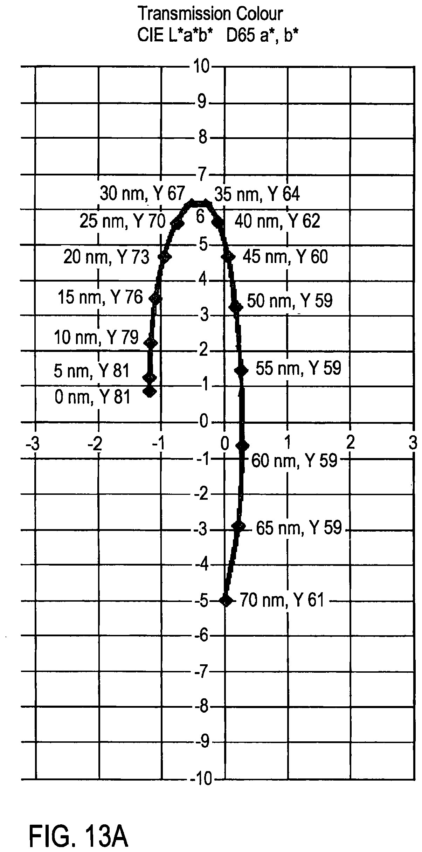

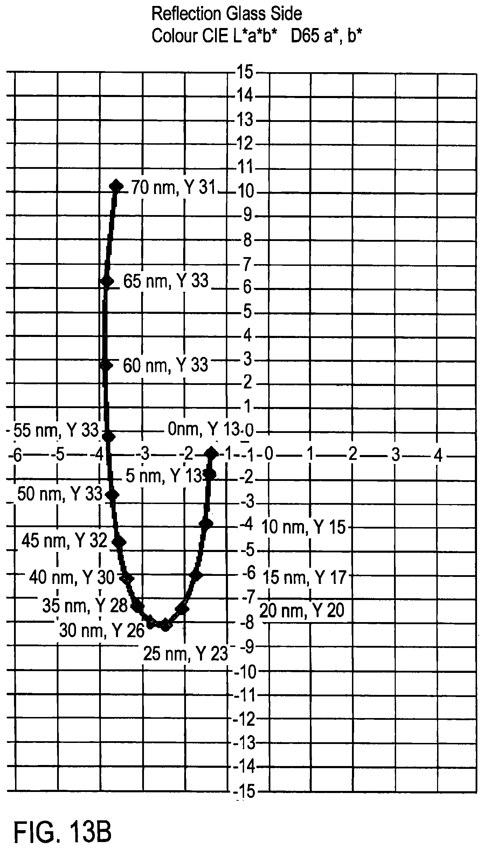

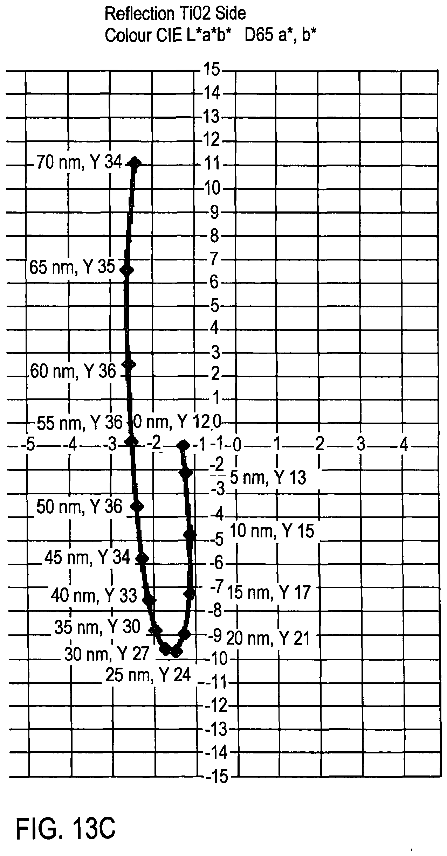

The same calculation of BUVAM1 was carried out for a Double Glazed Unit (DGU) 100 outside the scope of the present invention with $TiO_2$ coating on an external surface (surface #1) as shown in Figure 11. An antireflection coating 12 is deposited on surface #2 (10). Figures 11 & 12 can be compared with Figures 8 & 9 respectively (single glazing case) which show that the maximum falls are in the same location and the curve has the same shape, but shifted upwards slightly. The curves diverge to a greater degree due to the DGU construction. The important feature is the glass reflectance at 0nm $TiO_2$. This is nearly double the single glazed case and means the contrast ratio between UV coated stripes and non UV coated glass will be roughly halved. Figure 13 shows that colours are slightly muted by the internal clear glass. The transmission redness is reduced slightly with a small decrease in yellowness of transmission and blueness of reflection.

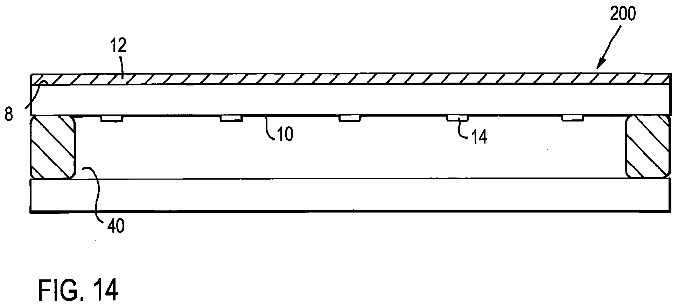

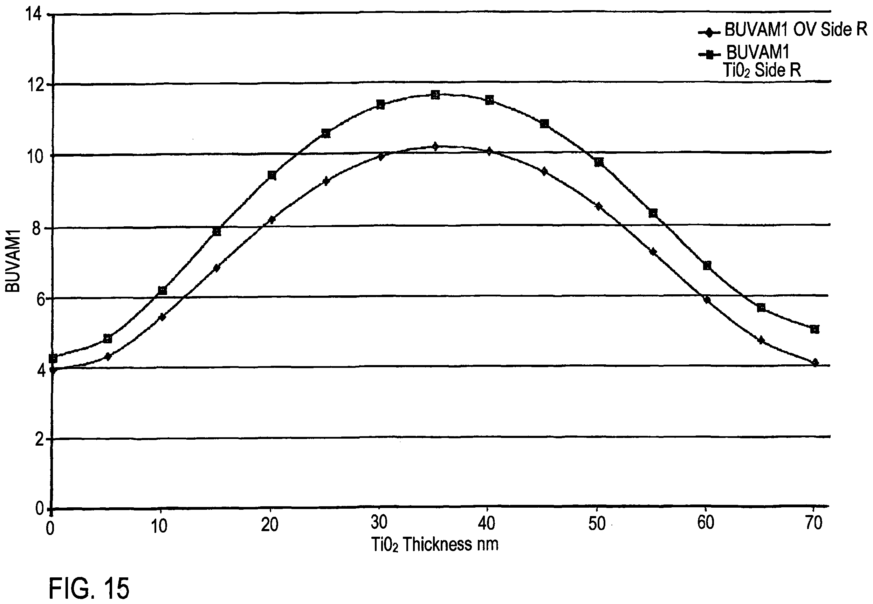

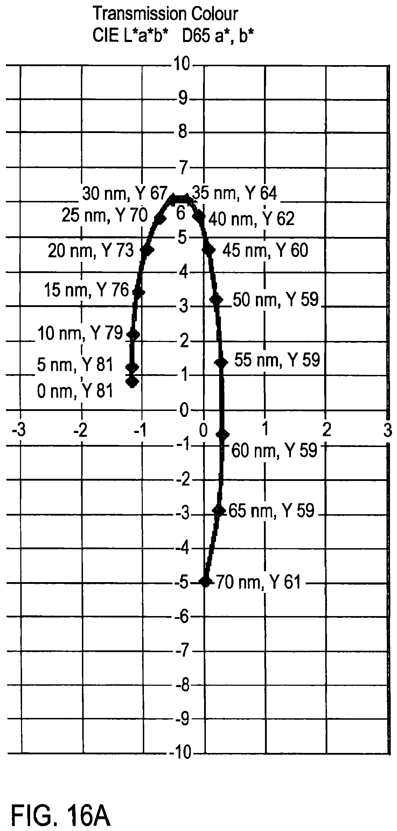

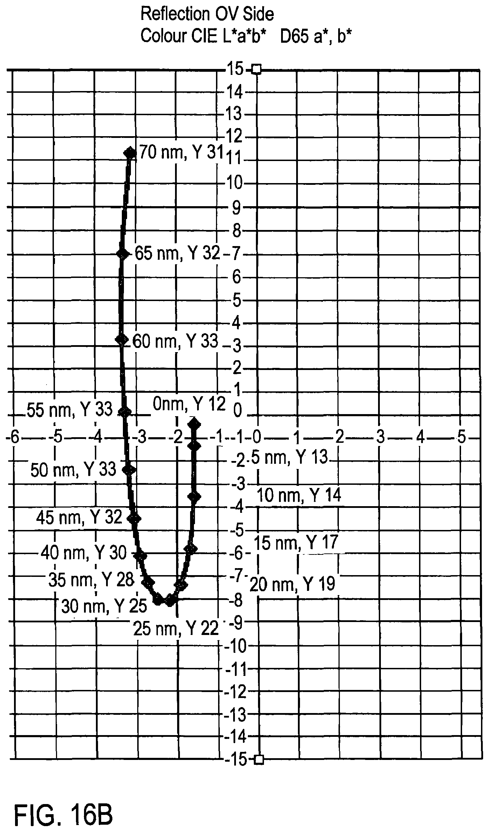

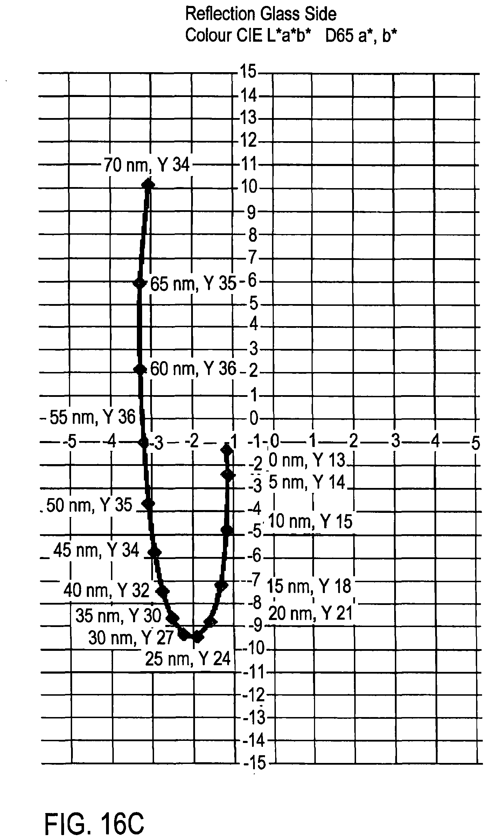

Figure 14 shows an alternative embodiment outside the scope of the invention wherein a DGU 200 has the antireflection coating 12 on surface #1 of the glazing and a UV reflective coating 14 on a surface 10 facing a space 40 (surface #2) of the unit. Figure 15 can be compared with Figure 9 (single glazing case) and Figure 12 (double glazing with $TiO_2$ on surface #1). It is clear from Figure 15 that it is better to have the clear glass pane as the outside ply than to have the antireflection coating on surface#1. This is an advantageous arrangement for this double glazing option as the sputtered coating is kept inside the DGU and is therefore less prone to damage. The visible colour attributes of the arrangement are shown in Figure 16. There is no significant difference to glazing with $TiO_2$ on surface #1.

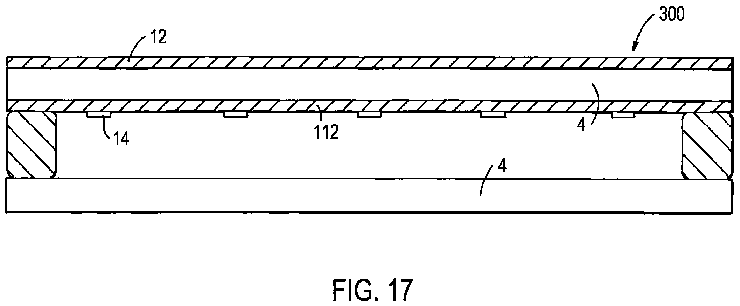

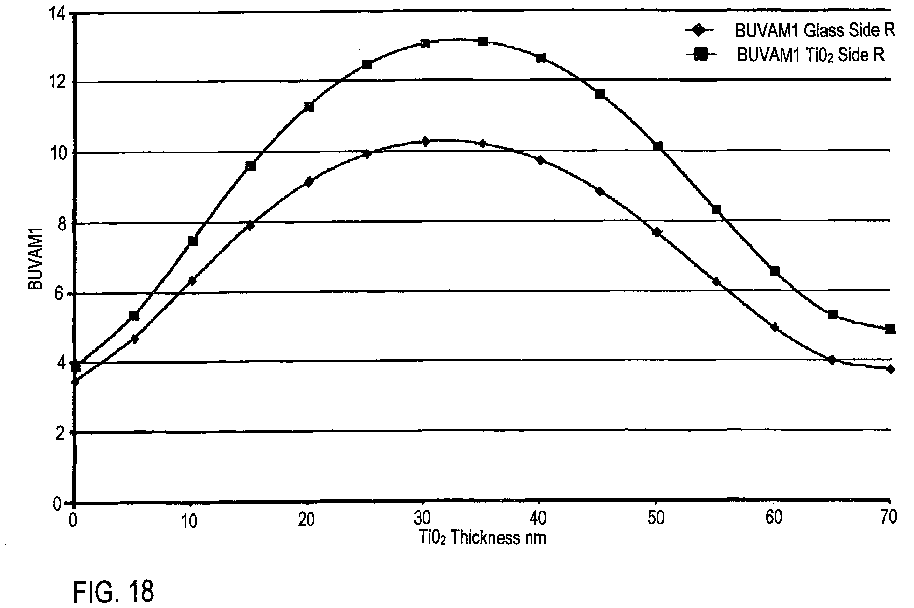

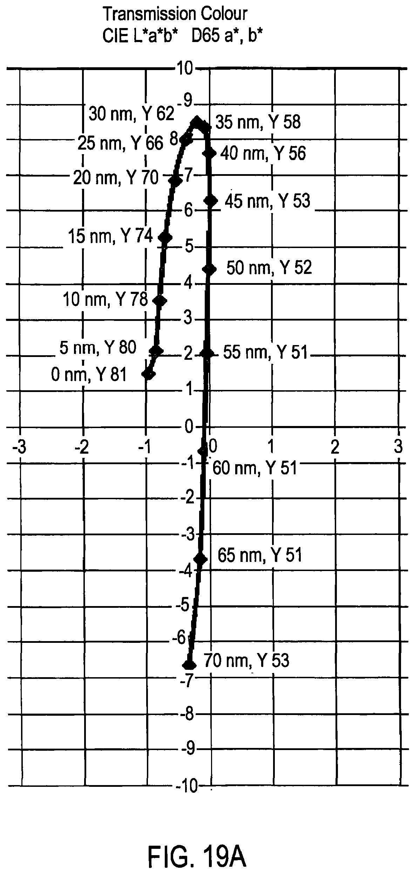

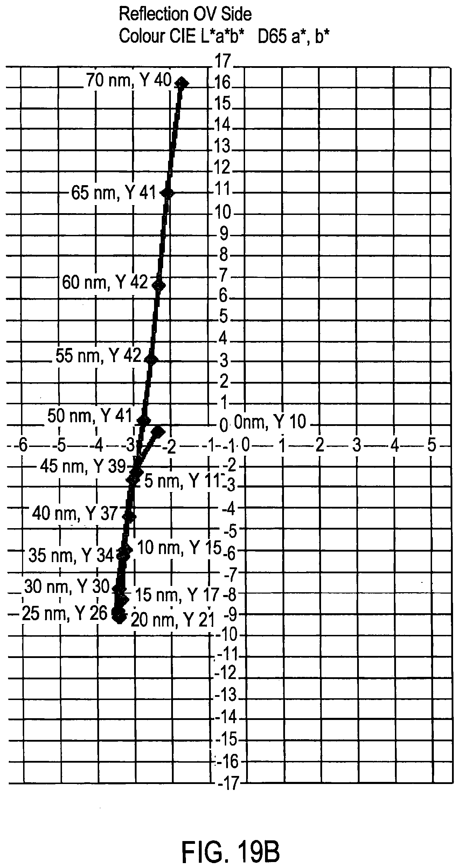

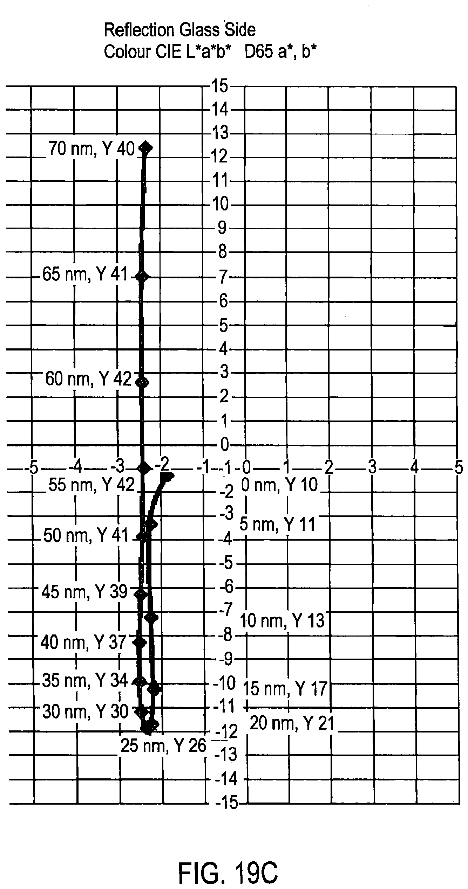

Figure 17 shows a further alternative embodiment of the invention having a DGU 300 with antireflection coating 12 on surface#1 and a second antireflection coating 112 on surface#2 of the first ply. A UV reflective coating 14 is deposited over the coating 112 on surface #2 in a striped arrangement. Model calculations are shown in Figures 18 and 19. Surprisingly, the contrast ratio is not improved significantly by the inclusion of the extra antireflection layer 12 on the external surface. However this contrast ratio is only based on the difference in Bird UV reflectance. The visible reflectance is decreased and this would reduce the overall reflectance in the glass areas that have no $TiO_2$ patterning. This design gives far stronger yellow transmission colour and bluer reflection.

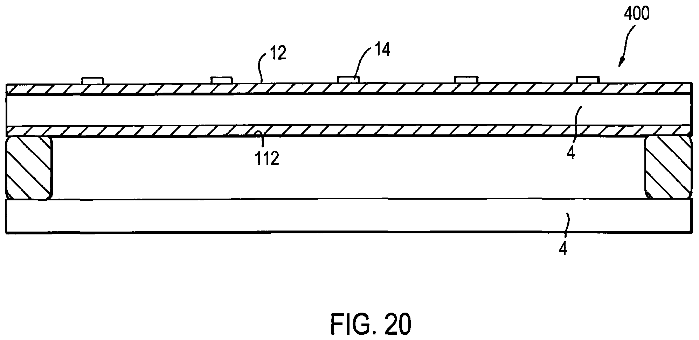

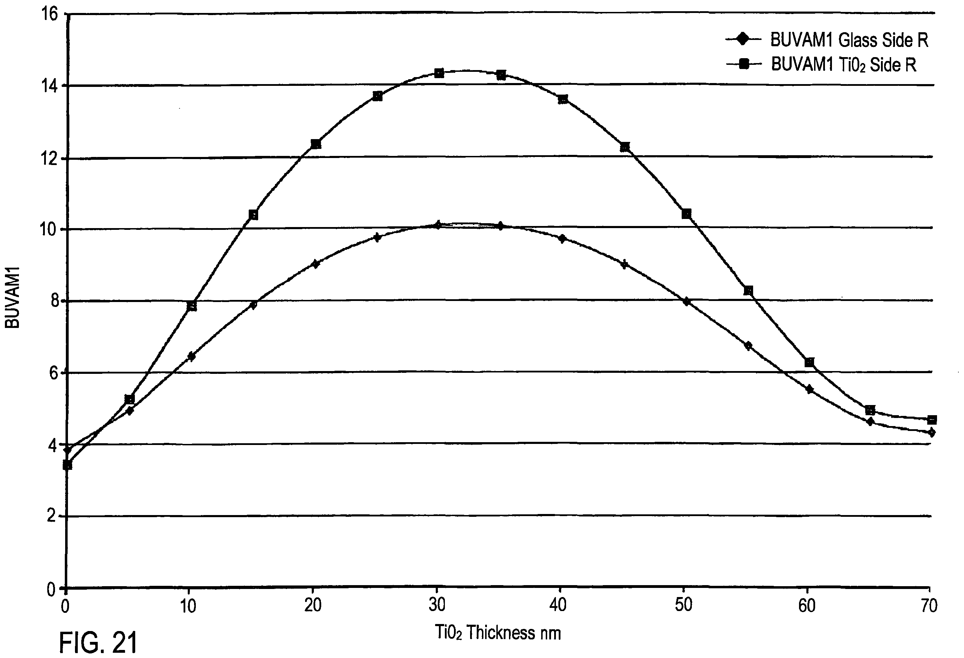

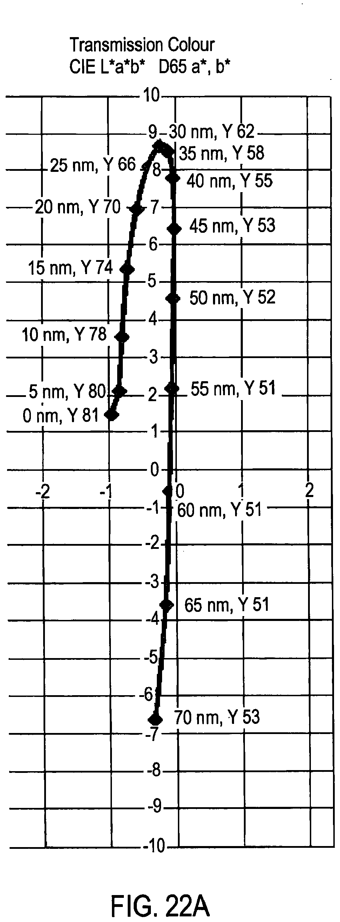

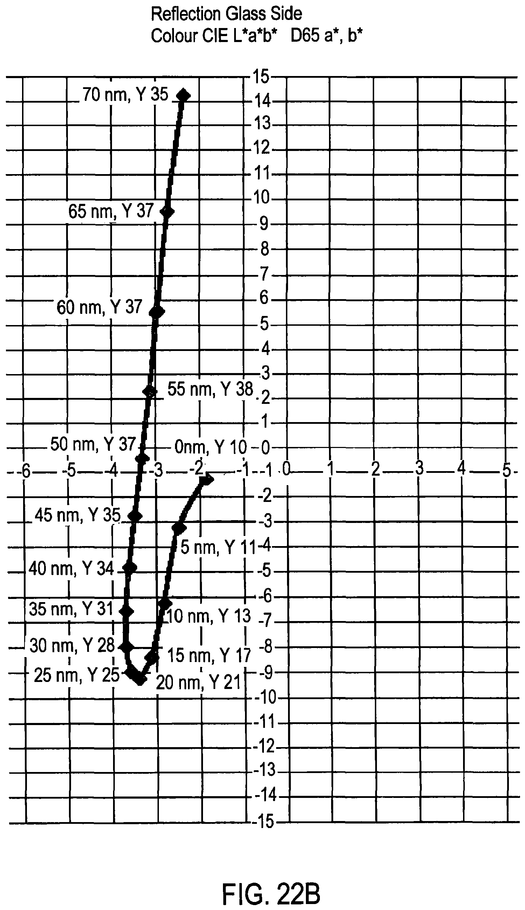

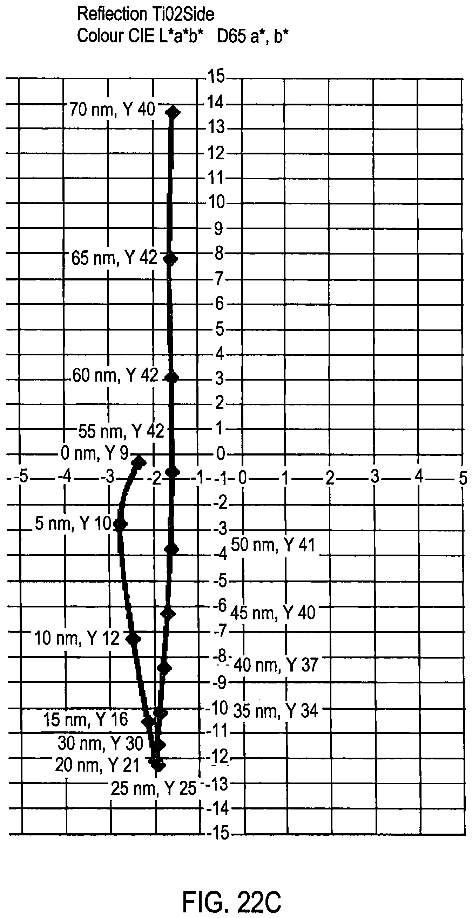

Figure 20 shows a further embodiment of the invention having a DGU 400 having antireflection coating 12 on surface #1 and a second antireflection coating 112 on surface #2, and a UV reflective coating 14 deposited on top of the coating 12 on surface #1. As shown in Figure 21, this configuration produces higher outright BUVAM1 and higher contrast ratio than that with $TiO_2$ on the internal surface. Figure 22 shows that the colours remain moderately yellow/blue.

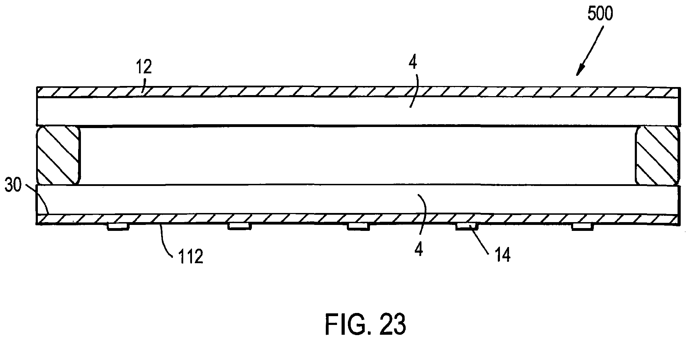

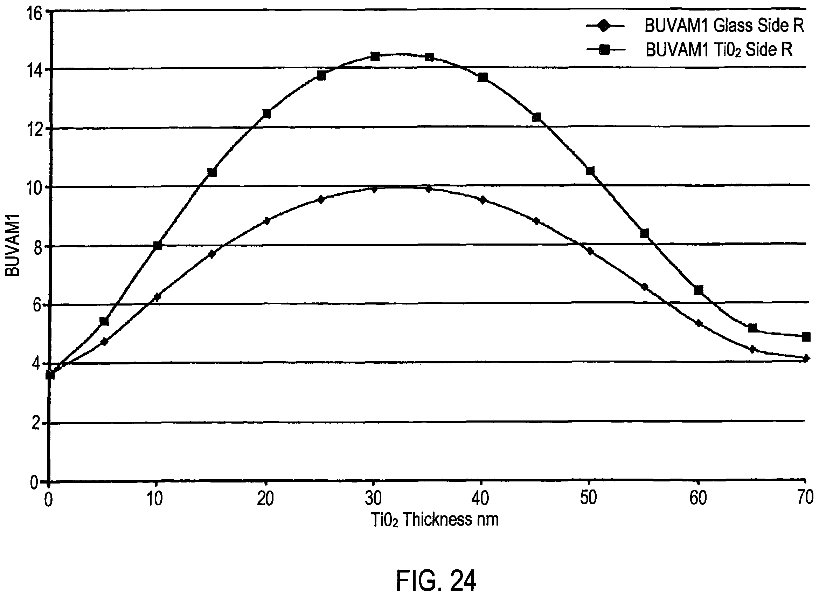

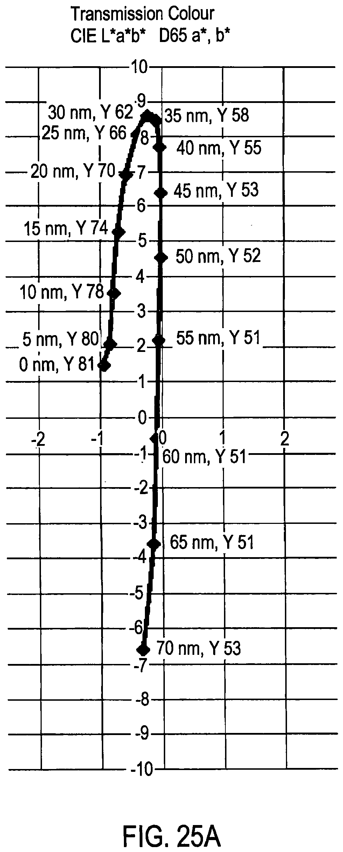

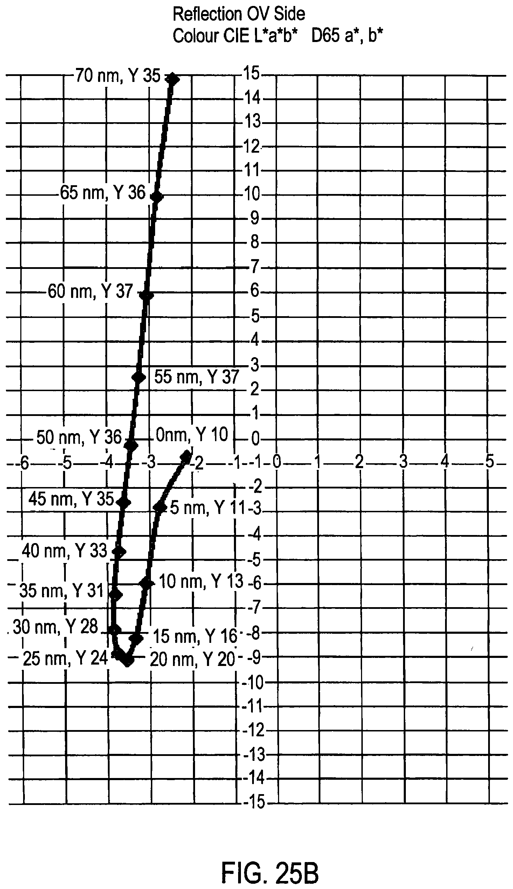

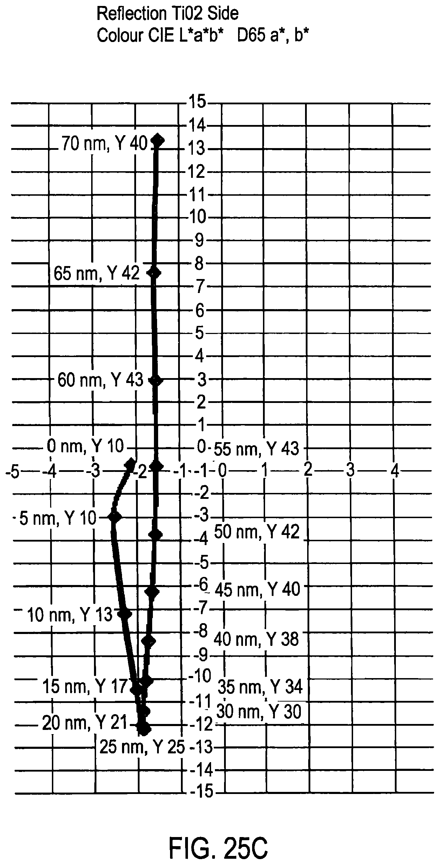

Figure 23 shows a further embodiment of the invention having a DGU 500 having antireflection coating 12 on surface #1 and a second antireflection coating 112 on surface #4 (30) of the unit. A UV reflective coating 14 is deposited on top of coating 112 on surface #4. This would be a simpler configuration for glazings with two antireflection coatings, rather than adding a reverse coating to a coated pane. Further, coating the antireflection coating directly ensures for minimal issues with back surface damage and the antireflection effect is destroyed locally. Other performance is similar as shown in Figures 24 and 25.

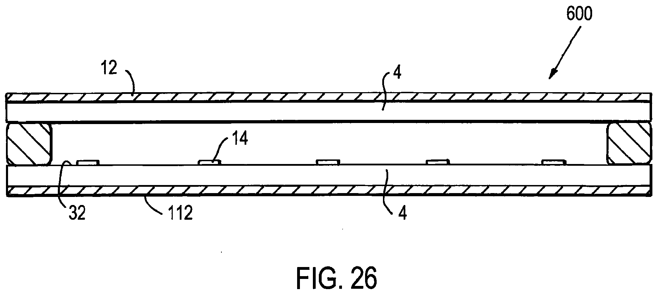

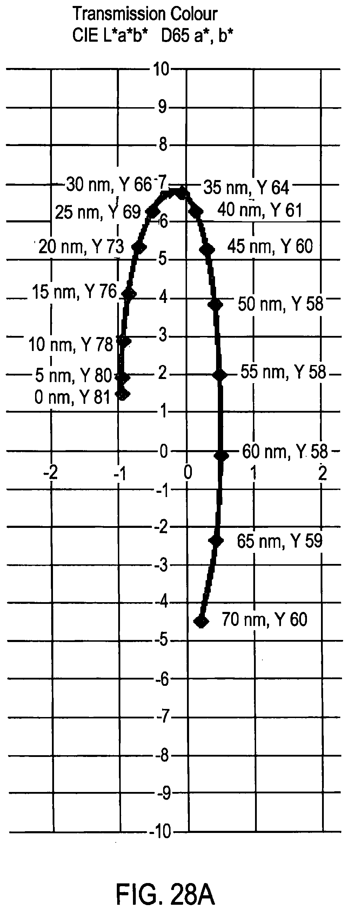

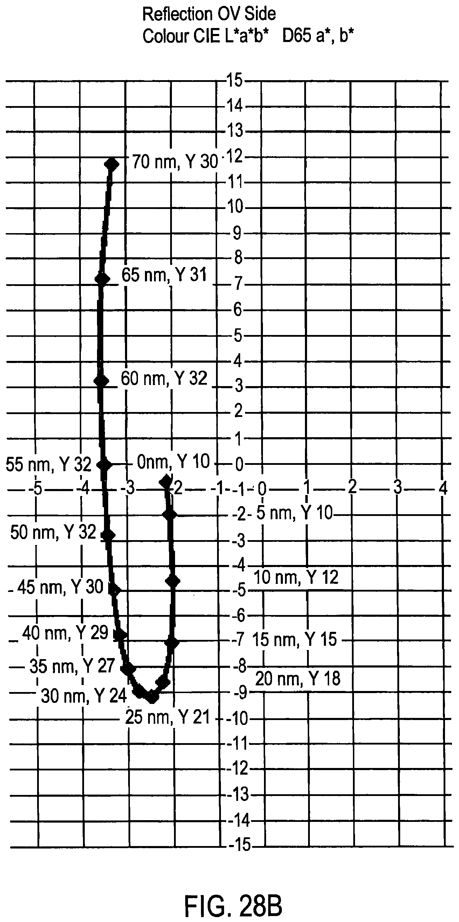

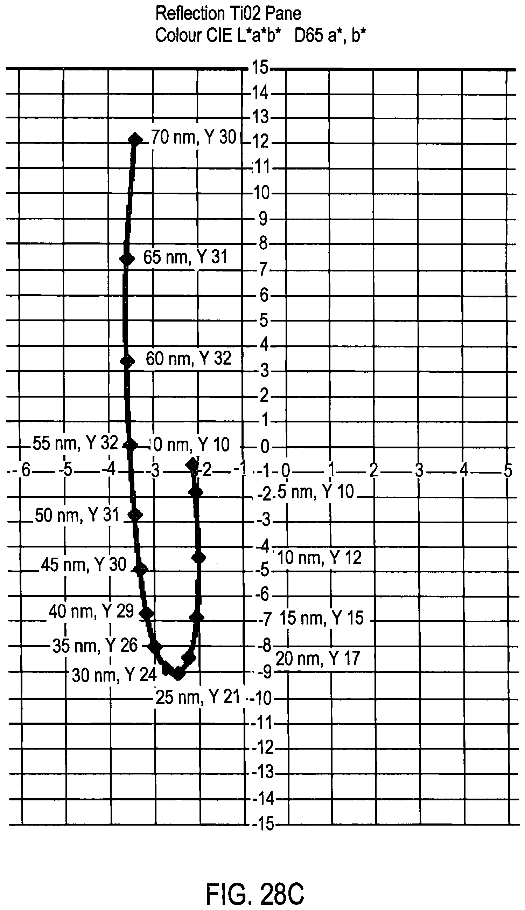

Figure 26 shows a further alternative embodiment outside the scope of the invention wherein a DGU 600 comprises an antireflective coating 12 on surface #1 and a second antireflection coating 112 on surface #4. A UV reflection coating 14 is deposited on an inner surface 32 of the second ply known as surface #3. Advantageously, this construction is easier to manufacture and has the benefit of improved colour as shown in Figure 28; this must be balanced with low BUVAM1 values and low contrast.

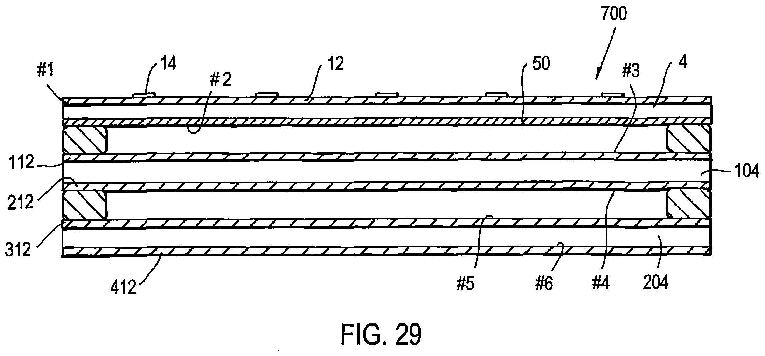

Figure 29 shows an embodiment of a triple glazed unit 700. The unit 700 comprises a first sheet of glazing material 4, a second sheet of glazing material 104, and a third sheet of glazing material 204. An antireflection coating 12, 112, 212, 312 and 412 is provided on surfaces #1, #3, #4, #5 and #6 of said sheets as shown in the figure. A UV reflection coating 14 is provided on top of the antireflection coating 12, in a striped arrangement. A solar control coating 50 is provided on surface #2. A low-E coating may in addition be deposited on surface #2, and/or surface #5, and/or surface #6.

The results are tabulated below in Table 1 which shows a 15 nm $TiO_2$ coating, and Table 2 which shows a 35 nm $TiO_2$ coating. The measured values are detailed further below.

**Contrast Ratio** is the ratio of BUVAM1 for a $TiO_2$ stripe to BUVAM1 for the uncoated Optiview. This is for external reflection unless stated otherwise.

i.e.

$$Contrast\ Ratio = \frac{BUVAM1\ TiO2\ Stripe}{BUVAM1\ Optiview}$$

**$R_{vis}$/BUVAM1** is a ratio which shows how the total energy reflected, for example in one stripe, is skewed away from the bird-visible UV. A smaller figure is better for the UV-reflecting stripes.

Table 1- Summary of integrated properties for 15nm $TiO_2$

| Figure | Construction | BUVAM1 | Contrast Ratio | Rvis | T b* | R b* | Rvis/ BUVAM1 |
|--------|--------------|--------|----------------|------|------|------|--------------|
| Fig. 1 | | 9.7 | 4.4 | 12.8 | 4.9 | -12.8 | 1.3 |

(continued)

| Figure | Construction | BUVAM1 | Contrast Ratio | Rvis | T b* | R b* | Rvis/ BUVAM1 |
|---|---|---|---|---|---|---|---|
|  | | 8.1 | 3.5 | 13.2 | 4.9 | -11.7 | 1.6 |
| Fig. 8 Comparative | | 7.3 | 3.2 | 11.5 | 3.7 | -10.4 | 1.6 |
|  | | 5.7 | 2.6 | 10.6 | 3.7 | -8.8 | 1.9 |
| Fig. 11 Comparative | | 8.5 | 2.1 | 17.5 | 3.5 | -7.2 | 2.1 |
|  | | 6.8 | 1.6 | 17.3 | 3.5 | -5.9 | 2.5 |
| Fig. 14 Comparative | | 6.8 | 1.7 | 16.7 | 3.5 | -5.8 | 2.5 |
|  | | 7.9 | 1.8 | 17.9 | 3.5 | -7.1 | 2.3 |
| Fig. 17 | | 7.9 | 2.3 | 15.8 | 5.3 | -8.2 | 2.0 |
|  | | 9.6 | 2.5 | 17.0 | 5.3 | -10.2 | 1.8 |
| Fig. 20 | | 10.4 | 3.0 | 16.0 | 5.4 | -10.5 | 1.5 |
|  | | 7.9 | 2.0 | 16.8 | 5.4 | -8.3 | 2.1 |
| Fig. 23 | | 7.7 | 2.1 | 16.1 | 5.3 | -8.2 | 2.1 |
|  | | 10.5 | 2.9 | 16.5 | 5.3 | -10.4 | 1.6 |

(continued)

| Figure | Construction | BUVAM1 | Contrast Ratio | Rvis | T b* | R b* | Rvis/ BUVAM1 |
|---|---|---|---|---|---|---|---|
| Fig. 26 Comparative | | 6.8 | 1.9 | 14.7 | 4.1 | -7.0 | 2.2 |
| | | 6.6 | 1.8 | 14.5 | 4.1 | -6.8 | 2.2 |

Table 2- Summary of integrated properties for 35nm $TiO_2$

| Figure | Construction | BUVAM 1 | Contrast Ratio | $R_{vis}$ | T b* | R b* | Rvis/ BUVAM1 |
|---|---|---|---|---|---|---|---|
| Fig. 1 | | 13.9 | 6.3 | 32.0 | 8.3 | -11.1 | 2.3 |
| | | 11.0 | 4.7 | 30.9 | 8.3 | 32.0 | 2.8 |
| Fig. 8 Comparative | | 12.2 | 5.3 | 25.9 | 6.6 | -10.6 | 2.1 |
| | | 9.5 | 4.3 | 23.6 | 6.6 | 25.9 | 2.5 |
| Fig. 11 Comparative | | 12.9 | 3.2 | 30.1 | 6.2 | -8.8 | 2.3 |
| | | 9.8 | 2.4 | 28.1 | 6.2 | 30.1 | 2.9 |
| Fig. 14 Comparative | | 10.2 | 2.6 | 27.8 | 6.1 | 30.1 | 2.7 |
| | | 11.6 | 2.7 | 30.1 | 6.1 | -8.6 | 2.6 |
| Fig. 17 | | 10.2 | 3.0 | 30.9 | 8.4 | 34.0 | 3.0 |
| | | 13.1 | 3.4 | 34.0 | 8.4 | -9.9 | 2.6 |

(continued)

| Figure | Construction | BUVAM 1 | Contrast Ratio | $R_{vis}$ | T b* | R b* | Rvis/ BUVAM1 |
|---|---|---|---|---|---|---|---|
| Fig. 20 | | 14.3 | 4.1 | 33.9 | 8.6 | -10.1 | 2.4 |
| | | 10.1 | 2.6 | 31.4 | 8.6 | 33.9 | 3.1 |
| Fig. 23 | | 9.9 | 2.7 | 30.7 | 8.5 | 34.3 | 3.1 |
| | | 14.4 | 3.9 | 34.3 | 8.5 | -10.1 | 2.4 |
| Fig. 26 Comparative | | 10.2 | 2.8 | 26.5 | 6.8 | 26.3 | 2.6 |
| | | 10.1 | 2.7 | 26.3 | 6.8 | -8.0 | 2.6 |

The results show that the single glazed panes give the optimum performance with the arrangement of Figure 1 being particularly good. In relation to the DGU arrangements, the highest performance option is shown by the arrangement of Figure 20. Advantageously, best performance is obtained when the TiO$_2$ coating (the UV reflective coating) is deposited directly on the antireflection coating 12 i.e. glass substrate with Optiview coating as shown in Figure 2.

Both the 15nm and 35nm TiO$_2$ thicknesses show the same pattern in relation to construction design but the performance is far better for 35nm embodiments. This is at the expense of colour which, for transmission b* moves from 5.3 to 8.5 when moving from 15 to 35nm. Experimental samples were constructed to demonstrate the modelling data as detailed below. From the modelling data, the optimum design for maximum avian visibility comprises a striped pattern of 35 nm of titania directly coated onto an antireflective coating (Optiview) coated substrate. For ease of manufacturing the titania pattern was deposited by shadow masking sputtered titania.

Experimental Samples

Demonstrator samples of 4mm substrate were made in two sizes, 650 mm wide x 1000 mm high and 500 mm wide x 1000 mm high. The pattern was 25 mm wide TiO$_2$ stripes at 100 mm pitch (i.e. 75mm wide OptiView stripes were between each pair of TiO$_2$ stripes as shown schematically in Figure 3). The pattern was a regular repeating pattern. Optical modelling of the deposited coating showed that the TiO$_2$ film was 31 nm thick and provided better than expected enhancement of bird-UV visible contrast in the pattern (Contrast Ratio of 9). The additional improvement came from lower than predicted UV reflectance in the Optiview substrate. This shows that control of the Optiview design to minimise UV reflectance is vital to maximise UV contrast.

The coating could theoretically be deposited in any number of coating techniques including, but not limited to, chemical vapour deposition, sputtering, sol-gel coating, evaporation, electroplating/oxidation, plasma-enhanced CVD, atomic layer deposition, pulsed laser deposition and various printing techniques. However for this particular experimental work, reactive magnetron sputtering was used.

**Coating Work** - **Experimental**

4 mm float glass substrate was coated with an antireflective coating; the substrate stack comprising glass/12

nm $SnO_2$/25 nm $SiO_2$/110 nm F:$SnO_2$/90 $SiO_2$ (Optiview). Shadow masks were made from thin glass cut to 75mm width and attached with vacuum compatible adhesive tape. The titania was deposited using pure Ti metal targets in plasma emission monitor-controlled oxygen reactive sputtering. The process conditions are shown in Table 3.

Table 3 - $TiO_2$ deposition parameters

| Layer | Material | Process Parameters |
|-------|----------|--------------------|
| 1 | Ti | 35 kW 100kHz MF, Speed 466 mm/min (5 passes), Ar 250 sccm, 13% PEM setpoint for Ti emission, controlling 02 flow (giving 62-73 sccm) |

Although the nominal coating thickness was 35 nm the actual deposited thickness was calculated by optical modelling of a single layer on a clear float glass substrate coated at the same time as the Optiview. This gave a good fit at 31 nm thickness. Even though this is less than the target of 35nm the effect on the Bird-UV reflectance is minimal.

## Results

Since all coating runs had the same deposition conditions, the optical measurements for one sample are considered. Spectrophotometer measurements were made between 350 and 1100 nm using a Hunterlab Ultrascan Pro. This range does not fully cover the BUVAM1 curve as it excludes roughly 11% of the energy. However, a person skilled in the art would appreciate that this is sufficient to provide an approximation of whether the coating performance is as expected and both the model data and experimental data are cut-off below 350 nm for the comparison. Table 4 lists the integrated values for the measured data and compares them to those expected for a for a 31 nm $TiO_2$ layer on the same Optiview stack substrate and the target 35 nm design on the higher UV-reflectance substrate. Samples were made in 3 coater runs.

Table 4 - Comparison of target, predicted and measured performance for 31nm $TiO_2$ on Optiview

| Parameter | Target 35nm Glass/OV/TiO2 | Model 31 nm Glass/OV/$TiO_2$ | Measured 31 nm Glass/OV/$TiO_2$ |
|-----------|---------------------------|------------------------------|----------------------------------|
| $R_{external}$ BUVAM1 (350nm cut-off) | 13.9 | 14.9 | 13.4 |
| Contrast Ratio | 6.3 | 10.0 | 8.9 |
| Rvis | 32 | 29.4 | 30.0 |
| T b* | 8.3 | 8.9 | 8.4 |
| $R_{external}$ b * | -11.1 | -13 | -8.7 |
| $R_{vis}$/BUVAM1 | 2.3 | 2.0 | 2.2 |
| Optiview™ BUVAM1 | 2.2 | 1.49 | 1.49 |

**$R_{vis}$/BUVAM1** is a ratio which shows how the total energy reflected, for example in one stripe, is skewed away from the bird-visible UV. A smaller figure is better for the UV-reflecting stripes. For the examples above, this ranges between 2 to 2.3. That means the stripes reflect twice as much "non-UV" light compared with UV. For the contrasting Optiview substrate it would be advantageous to have this ratio as large as possible. For the experimental Optiview sample without $TiO_2$ this is about 3.5.

The results shows that experimental data closely follows prediction with the exception of transmission b*, which is strongly affected by small errors at the blue end of the visible spectrum. The measured values were similar to the original 35nm prediction on the higher-UV-reflecting Optiview, but that difference in substrate UV reflectance makes a marked difference in the calculated Contrast Ratio, which uses it as a denominator. Control of the UV reflectance design between 330 and 430nm is an important factor in maximising BUVAM1 differences between the Optiview and $TiO_2$ stripes.

Advantageously, the results show that bird-UV contrast between $TiO_2$ coated areas and their uncoated surroundings can be significantly enhanced by adding preferably $TiO_2$ substantially 35nm thick and choosing the correct glazing construction. Best performance is obtained by coating $TiO_2$ over an Optiview coating on surface #1 (as shown in Figure 1). This is further enhanced by a second such antireflective coating on the reverse surface of the same pane or on the further pane in the DGU.

The patterned multilayer coatings have been developed with enhanced contrast for avian vision. The invention provides a combination of glass substrates with broadband antireflection coatings and enhanced UV reflection coatings. The coatings may be combined in different sequences and thicknesses to get a range of enhanced UV contrast effects. In some embodiments the UV reflective coating is used to destroy the anti-reflective performance of the AR coating while still enhancing UV reflectance to even further maximise the pattern contrast.

Further advantageously, the reflective $TiO_2$ not only provides enhanced UV reflectance, but also destroys the antireflective effect of the Optiview coating at the stripe location. This gives a dual enhancement of the UV pattern. Consequently, birds readily see the contrasting pattern and so the risk of bird collision with the glazing is minimised.

## Claims

1. A glazing for minimising or preventing bird collisions with windows or other glazings, the glazing comprising at least one substrate, an antireflection coating, and a UV reflectance coating, the antireflection coating being between the UV reflectance coating and the substrate, **characterised in that** the UV reflectance coating is provided in a patterned arrangement comprising a plurality of separate elements, each element being spaced apart from a neighbouring element,

   wherein the or each said UV reflectance coating comprises titanium dioxide having a geometric thickness of between substantially 10-50nm thick and
   wherein the UV reflectance coating covers at least 20% of the subjacent surface.

2. A glazing as claimed in claim 1, wherein the patterned arrangement comprises a plurality of stripes.

3. A glazing as claimed in claim 2, wherein said stripes are equidistantly spaced apart from one another.

4. A glazing as claimed in any one of the preceding claims, wherein a plurality of substantially 2.5cm wide UV reflecting stripes of said reflectance coating are provided, each said stripe being separated by a substantially 7.5cm antireflection coating stripe.

5. A glazing as claimed in any one of the preceding claims, wherein the antireflection coating is provided adjacent the substrate.

6. A glazing as claimed in any one of the preceding claims, wherein the UV reflectance coating is deposited on an exterior facing surface of the substrate.

7. A glazing as claimed in any one of the preceding claims, wherein the antireflection coating is provided on a surface #1 of the substrate, and a plurality of patterned areas of UV reflectance coating are provided directly on top of said antireflection coating.

8. An insulated glazing unit for minimising or preventing bird collisions with windows or other glazings, comprising a first sheet of glazing material, a second sheet of glazing material, at least one antireflection coating, and at least one UV reflectance coating, **characterised in that** the UV reflectance coating is provided in a patterned arrangement comprising a plurality of separate elements, and said antireflection coating is between said UV reflectance coating and either the first and/or second sheet of glazing material,

   wherein the or each said UV reflectance coating comprises titanium dioxide having a geometric thickness of between substantially 10-50nm thick and
   wherein the UV reflectance coating covers at least 20% of the subjacent surface.

9. An insulated glazing unit as claimed in claim 8, wherein the antireflection coating is provided on a surface #1 of the unit and a second antireflection coating is provided on a surface #4, wherein the UV reflectance coating is provided on top of the antireflection coating on surface #1.

10. An insulated glazing unit for minimising or preventing bird collisions with windows or other glazings, comprising a first sheet of glazing material, a second sheet of glazing material, a third sheet of glazing material, at least one antireflection coating, and at least one UV reflectance coating, **characterised in that** the UV reflectance coating is provided in a patterned arrangement comprising a plurality of separate elements, and the antireflection coating is between the UV reflectance coating and either the first and/or second sheet, and/or the third sheet of glazing material,

**EP 3 004 010 B1**

wherein the or each said UV reflectance coating comprises titanium dioxide having a geometric thickness of between substantially 10-50nm thick and
wherein the UV reflectance coating covers at least 20% of the subjacent surface.

11. A glazing or glazing unit as claimed in any one of the preceding claims, wherein the or each antireflection coating comprises $SnO_x$ and/or $SiO_2$.

12. A glazing or glazing unit as claimed in claim 11, wherein said antireflection coating comprises a plurality of layers, said layers comprising: a first layer comprising tin oxide; a second layer comprising silicon oxide; a third layer comprising fluorine doped tin oxide; and a fourth layer comprising a silicon oxide.

13. A glazing or glazing unit as claimed in claim 12, wherein the UV reflectance coating is provided on the fourth layer of the antireflection coating.

14. A method of manufacturing a glazing for minimising or preventing bird collisions with windows or other glazings; the method comprising the following steps:

a) Providing at least one substrate;
b) Depositing at least one antireflection coating on a surface of the substrate;
c) Depositing at least one UV reflectance coating in a patterned arrangement, the patterned arrangement comprising a plurality of separate elements, over the or each antireflection coating,
wherein the or each said UV reflectance coating comprises titanium dioxide having a geometric thickness of between substantially 10-50nm thick and
wherein the UV reflectance coating covers at least 20% of the subjacent surface.

15. A method as claimed in claim 14, wherein step (b) is carried out using a chemical vapour deposition process.

16. Use of a glazing or glazing unit as claimed in any one of claims 1 to 13 as an anti-collision bird safe glazing.

## Patentansprüche

1. Verglasung zur Minimierung oder Verhinderung von Vogelschlag an Fenstern oder anderen Verglasungen, wobei die Verglasung mindestens ein Substrat, eine Antireflexionsbeschichtung und eine UV-Reflexionsbeschichtung umfasst, wobei sich die Antireflexionsbeschichtung zwischen der UV-Reflexionsbeschichtung und dem Substrat befindet, **dadurch gekennzeichnet, dass** die UV-Reflexionsbeschichtung in einer strukturierten Anordnung vorgesehen ist, die eine Mehrzahl von separaten Elementen umfasst, wobei jedes Element von einem benachbarten Element beabstandet ist,

wobei die oder jede UV-Reflexionsbeschichtung Titandioxid mit einer geometrischen Dicke von im Wesentlichen 10-50 nm umfasst und
wobei die UV-Reflexionsbeschichtung mindestens 20% der darunterliegenden Oberfläche bedeckt.

2. Verglasung nach Anspruch 1, bei der die strukturierte Anordnung eine Mehrzahl von Streifen umfasst.

3. Verglasung nach Anspruch 2, bei der die Streifen äquidistant voneinander beabstandet sind.

4. Verglasung nach einem der vorhergehenden Ansprüche, bei der eine Mehrzahl von im Wesentlichen 2,5 cm breiten UV-reflektierenden Streifen der Reflexionsbeschichtung vorgesehen ist, wobei jeder dieser Streifen durch einen im Wesentlichen 7,5 cm breiten Streifen der Antireflexionsbeschichtung getrennt ist.

5. Verglasung nach einem der vorhergehenden Ansprüche, bei der die Antireflexionsbeschichtung angrenzend an das Substrat vorgesehen ist.

6. Verglasung nach einem der vorhergehenden Ansprüche, bei der die UV-Reflexionsbeschichtung auf einer nach außen gewandten Oberfläche des Substrats aufgebracht ist.

7. Verglasung nach einem der vorhergehenden Ansprüche, bei der die Antireflexionsbeschichtung auf einer Oberfläche # 1 des Substrats aufgebracht ist und eine Mehrzahl von strukturierten Bereichen der UV-Reflexionsbeschichtung direkt auf der Antireflexionsbeschichtung aufgebracht ist.

8. Isolierverglasungseinheit zur Minimierung oder Verhinderung von Vogelschlag an Fenstern oder anderen Verglasungen, die eine erste Platte aus Verglasungsmaterial, eine zweite Platte aus Verglasungsmaterial, mindestens eine Antireflexionsbeschichtung und mindestens eine UV-Reflexionsbeschichtung umfasst, **dadurch gekennzeichnet, dass** die UV-Reflexionsbeschichtung in einer strukturierten Anordnung vorgesehen ist, die eine Mehrzahl von separaten Elementen umfasst, und die Antireflexionsbeschichtung zwischen der UV-Reflexionsbeschichtung und entweder der ersten und/oder der zweiten Platte aus Verglasungsmaterial liegt,

wobei die oder jede UV-Reflexionsbeschichtung Titandioxid mit einer geometrischen Dicke von im Wesentlichen 10-50nm umfasst und
wobei die UV-Reflexionsbeschichtung mindestens 20% der darunter liegenden Oberfläche bedeckt.

9. Isolierverglasungseinheit nach Anspruch 8, bei der die Antireflexionsbeschichtung auf einer Oberfläche # 1 der Einheit und eine zweite Antireflexionsbeschichtung auf einer Oberfläche #4 vorgesehen ist, wobei die UV-Reflexionsbeschichtung über der Antireflexionsbeschichtung auf der Oberfläche # 1 vorgesehen ist.

10. Isolierverglasungseinheit zur Minimierung oder Verhinderung von Vogelschlag an Fenstern oder anderen Verglasungen, die eine erste Platte aus Verglasungsmaterial, eine zweite Platte aus Verglasungsmaterial, eine dritte Platte aus Verglasungsmaterial, mindestens eine Antireflexionsbeschichtung und mindestens eine UV-Reflexionsbeschichtung umfasst, **dadurch gekennzeichnet, dass** die UV-Reflexionsbeschichtung in einer strukturierten Anordnung vorgesehen ist, die eine Mehrzahl von separaten Elementen umfasst, und die Antireflexionsbeschichtung zwischen der UV-Reflexionsbeschichtung und entweder der ersten und/oder zweiten Platte und/oder der dritten Platte aus Verglasungsmaterial angeordnet ist,

wobei die oder jede der UV-reflektierenden Beschichtungen Titandioxid mit einer geometrischen Dicke von im Wesentlichen 10-50nm umfasst und
wobei die UV-Reflexionsbeschichtung mindestens 20 % der darunter liegenden Oberfläche bedeckt.

11. Verglasung oder Verglasungseinheit nach einem der vorhergehenden Ansprüche, bei der die oder jede Antireflexionsbeschichtung $SnO_x$ und/oder SiOz umfasst.

12. Verglasung oder Verglasungseinheit nach Anspruch 11, bei der die Antireflexionsbeschichtung eine Mehrzahl von Schichten umfasst, wobei die Schichten umfassen: eine erste Schicht, die Zinnoxid umfasst; eine zweite Schicht, die Siliziumoxid umfasst; eine dritte Schicht, die mit Fluor dotiertes Zinnoxid umfasst; und eine vierte Schicht, die ein Siliziumoxid umfasst.

13. Verglasung oder Verglasungseinheit nach Anspruch 12, bei der die UV-Reflexionsbeschichtung auf der vierten Schicht der Antireflexionsbeschichtung vorgesehen ist.

14. Verfahren zum Herstellen einer Verglasung zur Minimierung oder Verhinderung von Vogelschlag an Fenstern oder anderen Verglasungen; wobei das Verfahren die folgenden Schritte umfasst:

a) Bereitstellen mindestens eines Substrats;
b) Aufbringen von mindestens einer Antireflexionsbeschichtung auf eine Oberfläche des Substrats;
c) Aufbringen mindestens einer UV-Reflexionsbeschichtung in einer strukturierten Anordnung, wobei die strukturierte Anordnung eine Mehrzahl von separaten Elementen umfasst, über der oder jeder Antireflexionsbeschichtung,
wobei die oder jede UV-Reflexionsbeschichtung Titandioxid mit einer geometrischen Dicke von im Wesentlichen 10-50nm umfasst und
wobei die UV-Reflexionsbeschichtung mindestens 20% der darunter liegenden Oberfläche bedeckt.

15. Verfahren nach Anspruch 14, bei dem Schritt (b) unter Anwendung eines Gasphasenabscheidungsprozesses durchgeführt wird.

16. Verwendung einer Verglasung oder Verglasungseinheit nach einem der Ansprüche 1 bis 13 als vogelschlagsichere Verglasung.

**Revendications**

1. Vitrage qui permet de réduire à un minimum ou de prévenir les collisions des oiseaux contre les fenêtres ou autres vitrages, le vitrage comprenant au moins un substrat, un revêtement antireflet, et un revêtement réfléchissant les UV, le revêtement antireflet étant entre le revêtement réfléchissant les UV et le substrat, **caractérisé en ce que** le revêtement réfléchissant les UV se présente sous la forme d'un agencement à motifs comprenant une pluralité d'éléments séparés, chaque élément étant espacé d'un élément voisin,

   dans lequel le ou chacun desdits revêtements réfléchissant les UV comprend du dioxyde de titane ayant une épaisseur géométrique sensiblement entre 10 et 50 nm d'épais et
   dans lequel le revêtement réfléchissant les UV couvre au moins 20 % de la surface sous-j acente.

2. Vitrage selon la revendication 1, dans lequel l'agencement à motifs comprend une pluralité de bandes.

3. Vitrage selon la revendication 2, dans lequel lesdites bandes sont espacées les unes des autres de manière équidistante.

4. Vitrage selon l'une quelconque des revendications précédentes, dans lequel une pluralité de bandes réfléchissant les UV de sensiblement 2,5 cm de large dudit revêtement réfléchissant sont fournies, chacune desdites bandes étant séparée par une bande de revêtement antireflet de sensiblement 7,5 cm.

5. Vitrage selon l'une quelconque des revendications précédentes, dans lequel le revêtement antireflet est prévu adjacent au substrat.

6. Vitrage selon l'une quelconque des revendications précédentes, dans lequel le revêtement réfléchissant les UV est déposé sur une surface du substrat tournée vers l'extérieur.

7. Vitrage selon l'une quelconque des revendications précédentes, dans lequel le revêtement antireflet est fourni sur une surface #1 du substrat, et une pluralité de zones à motifs du revêtement réfléchissant les UV sont fournies directement sur le dessus dudit revêtement antireflet.

8. Unité de vitrage isolée pour réduire à un minimum ou prévenir les collisions des oiseaux contre les fenêtres ou autres vitrages, comprenant une première feuille d'un matériau de vitrage, une deuxième feuille d'un matériau de vitrage, au moins un revêtement antireflet, et au moins un revêtement réfléchissant les UV, **caractérisé en ce que** le revêtement réfléchissant les UV se présente sous la forme d'un agencement à motifs comprenant une pluralité d'éléments séparés, et ledit revêtement antireflet est entre ledit revêtement réfléchissant les UV et les première et/ou deuxième feuilles de matériau de vitrage,

   dans lequel le ou chacun desdits revêtements réfléchissant les UV comprend du dioxyde de titane ayant une épaisseur géométrique sensiblement entre 10 et 50 nm d'épais et
   dans lequel le revêtement réfléchissant les UV couvre au moins 20 % de la surface sous-j acente.

9. Unité de vitrage isolée selon la revendication 8, dans lequel le revêtement antireflet est fourni sur une surface #1 de l'unité et un second revêtement antireflet est fourni sur une surface #4, dans lequel le revêtement réfléchissant les UV est fourni par-dessus le revêtement antireflet sur la surface #1.

10. Unité de vitrage isolée pour réduire à un minimum ou prévenir les collisions des oiseaux contre les fenêtres ou autres vitrages, comprenant une première feuille d'un matériau de vitrage, une deuxième feuille d'un matériau de vitrage, une troisième feuille d'un matériau de vitrage, au moins un revêtement antireflet, et au moins un revêtement réfléchissant les UV, **caractérisé en ce que** le revêtement réfléchissant les UV se présente sous la forme d'un agencement à motifs comprenant une pluralité d'éléments séparés, et le revêtement antireflet est entre le revêtement réfléchissant les UV et les première et/ou deuxième feuilles, et/ou la troisième feuille de matériau de vitrage,

    dans lequel le ou chacun desdits revêtements réfléchissant les UV comprend du dioxyde de titane ayant une épaisseur géométrique sensiblement entre 10 et 50 nm d'épais et
    dans lequel le revêtement réfléchissant les UV couvre au moins 20 % de la surface sous-j acente.

11. Vitrage ou unité de vitrage selon l'une quelconque des revendications précédentes, dans lequel le ou chacun desdits revêtements antireflet comprend du $SnO_x$ et/ou du $SiO_2$.

**12.** Vitrage ou unité de vitrage selon la revendication 11, dans lequel ledit revêtement antireflet comprend une pluralité de couches, lesdites couches comprenant : une première couche comprenant de l'oxyde d'étain ; une deuxième couche comprenant de l'oxyde de silicium ; une troisième couche comprenant de l'oxyde d'étain dopé au fluor ; et une quatrième couche comprenant un oxyde de silicium.

**13.** Vitrage ou unité de vitrage selon la revendication 12, dans lequel le revêtement réfléchissant les UV est fourni sur la quatrième couche du revêtement antireflet.

**14.** Procédé de fabrication d'un vitrage pour réduire à un minimum ou prévenir les collisions des oiseaux contre les fenêtres ou autres vitrages ; le procédé comprenant les étapes suivantes :

a) fournir au moins un substrat ;
b) déposer au moins un revêtement antireflet sur une surface du substrat ;
c) déposer au moins un revêtement réfléchissant les UV selon un agencement à motifs, l'agencement à motifs comprenant une pluralité d'éléments séparés, sur le ou chaque revêtement antireflet,
dans lequel le ou chacun desdits revêtements réfléchissant les UV comprend du dioxyde de titane ayant une épaisseur géométrique entre sensiblement 10 et 50 nm d'épais et
dans lequel le revêtement réfléchissant les UV couvre au moins 20 % de la surface sous-j acente.

**15.** Procédé selon la revendication 14, dans lequel l'étape (b) est réalisée en utilisant un processus de dépôt chimique en phase vapeur.

**16.** Utilisation d'un vitrage ou d'une unité de vitrage selon l'une quelconque des revendications 1 à 13 en tant que vitrage anticollision de sécurité pour les oiseaux.

FIG. 1

| 22 | SiO$_2$ |
| 20 | F: SnO$_2$ |
| 18 | SiO$_2$ |
| 16 | SnO$_2$ |
| 4 | |

FIG. 2

FIG. 3

Visible

Reflectance Film Side

Reflectance Glass Side

FIG. 4A

FIG. 4B

FIG. 4C

FIG. 5

FIG. 6

Transmission Colour
CIE L*a*b*  D65 a*, b*

FIG. 7A

Reflection Glass Side
Colour CIE L*a*b*   D65 a*, b*

FIG. 7B

Reflection TiO2 Side
Colour CIE L*a*b*  D65 a*, b*

FIG. 7C

EP 3 004 010 B1

FIG. 8

FIG. 9

EP 3 004 010 B1

Transmission Colour
CIE L*a*b*   D65 a*, b*

FIG. 10A

Reflection OV Side
Colour CIE L*a*b*   D65 a*, b*

FIG. 10B

Reflection Ti02 Side
Colour CIE L*a*b*   D65 a*, b*

FIG. 10C

FIG. 11

FIG. 12

EP 3 004 010 B1

Transmission Colour
CIE L*a*b*   D65 a*, b*

FIG. 13A

Reflection Glass Side
Colour CIE L*a*b*   D65 a*, b*

FIG. 13B

Reflection TiO2 Side
Colour CIE L*a*b*   D65 a*, b*

FIG. 13C

EP 3 004 010 B1

**FIG. 14**

FIG. 15

Transmission Colour
CIE L*a*b*   D65 a*, b*

FIG. 16A

Reflection OV Side
Colour CIE L*a*b*  D65 a*, b*

FIG. 16B

Reflection Glass Side
Colour CIE L*a*b*   D65 a*, b*

FIG. 16C

EP 3 004 010 B1

FIG. 17

FIG. 18

EP 3 004 010 B1

Transmission Colour
CIE L*a*b*   D65 a*, b*

FIG. 19A

Reflection OV Side
Colour CIE L*a*b*   D65 a*, b*

FIG. 19B

Reflection Glass Side
Colour CIE L*a*b*   D65 a*, b*

FIG. 19C

FIG. 20

FIG. 21

EP 3 004 010 B1

Transmission Colour
CIE L*a*b*   D65 a*, b*

FIG. 22A

Reflection Glass Side
Colour CIE L*a*b*   D65 a*, b*

FIG. 22B

47

Reflection TiO2Side
Colour CIE L*a*b*   D65 a*, b*

FIG. 22C

FIG. 23

FIG. 24

EP 3 004 010 B1

Transmission Colour
CIE L*a*b*   D65 a*, b*

FIG. 25A

Reflection OV Side
Colour CIE L*a*b*   D65 a*, b*

FIG. 25B

Reflection TiO2 Side
Colour CIE L*a*b*   D65 a*, b*

FIG. 25C

FIG. 26

FIG. 27

Transmission Colour
CIE L*a*b* D65 a*, b*

FIG. 28A

Reflection OV Side
Colour CIE L*a*b*   D65 a*, b*

FIG. 28B

Reflection Ti02 Pane
Colour CIE L*a*b*   D65 a*, b*

FIG. 28C

58

FIG. 29

**REFERENCES CITED IN THE DESCRIPTION**

**Patent documents cited in the description**

- US 2013003208 A1
- WO 9742357 A1